# FASCICULE DE BREVET EUROPEEN

(11) **EP 0 979 176 B1**
(45) Date de publication et mention de la délivrance du brevet: **30.07.2003**
(21) Numéro de dépôt: 98914926.5
(22) Date de dépôt: 16.03.1998
(51) Int. Cl.: B60M 1/08, B60M 1/34

(54) **DISPOSITIF D'ALIMENTATION PAR LE SOL DE VEHICULE ELECTRIQUE AVEC MISE A LA TERRE**
BODENSTROMVERSORGUNG FUR EIN ELEKTRISCHES FAHRZEUG MIT ERDVERBINDUNGSVORRICHTUNG
GROUND POWER SUPPLY FOR ELECTRIC VEHICLE WITH EARTH CONNECTION

(30) Priorité: 30.04.1997 FR 9705370
(43) Date de publication de la demande: 16.02.2000
(73) Titulaire: INNORAIL, 95863 Cergy-Pontoise (FR)
(72) Inventeur: PERRAUD, Olivier, F-78150 Le Chesnay (FR); BRUNET, Stéphane, F-75002 Paris (FR); MORIN, Bruno, F-75007 Paris (FR)
(74) Mandataire: Texier, Christian
(86) Numéro de dépôt international: FR9800526
(87) Numéro de publication internationale: WO98049025

(56) Documents cités:
- WO-A-93/10995

## Description

L'invention concerne les dispositifs d'alimentation par le sol de véhicules électriques. Elle concerne aussi bien les véhicules ferroviaires que les véhicules non guidés par des rails, comme par exemple les voitures particulières électriques dirigées par un utilisateur ou encore des bus dirigés par un conducteur.

Plus particulièrement, elle concerne de tels dispositifs dans lesquels une piste d'alimentation est constituée d'une suite de segments isolés électriquement les uns des autres, et où seuls les segments protégés par le véhicule sont mis sous tension.

On trouve habituellement, dans le cas des transports urbains ou interurbains électrifiés, des dispositifs d'alimentation comportant une ligne aérienne de contact. De telles lignes aériennes de contact sont de plus en plus difficiles à faire admettre dans les zones urbaines, en particulier dans les villes historiques, pour des raisons esthétiques.

Les dispositifs à ligne aériennes de contact ne sont pas, de plus, exempts de risques d'électrocution pour les piétons, notamment en raison des risques de rupture de la ligne de contact.

Le brevet allemand DE 3048730 propose un dispositif dans lequel une ligne continue sous tension, formant bus d'alimentation, est disposée sous un rail sectionné disposé au sol, au contact duquel glissent des patins de captation du véhicule.

Entre chaque segment du rail sectionné et la ligne continue, est disposé un plot relié électriquement à la ligne continue qui est en retrait vers le bas par rapport au rail d'alimentation lorsqu'aucun véhicule n'est présent sur le segment considéré.

Un barreau aimanté est situé sous le véhicule, et lorsque le véhicule est au-dessus d'un segment donné, le barreau attire le plot contre le segment. Le segment est alors mis sous tension par l'intermédiaire de la liaison électrique entre le plot et la ligne continue sous tension.

Une fois le véhicule passé, le plot reprend sa place en retrait du rail d'alimentation, et ce dernier n'est plus alimenté.

Pour des raisons de sécurité, et pour éviter les courts-circuits, la longueur des segments d'alimentation est choisie de façon telle que seuls des segments couverts par le véhicule sont mis sous tension.

Ce dispositif présente un inconvénient majeur : bien qu'ils ne soient plus alimentés en dehors de la présence d'un véhicule, les segments peuvent conserver une charge électrique importante.

Ainsi, dans une utilisation en milieu urbain, comme par exemple pour l'alimentation d'un tramway, un tel dispositif présente un réel danger d'électrocution pour les piétons.

En outre, ce dispositif, prévu pour un utilisation dans le cas de voitures à batteries, est mal adapté dans le cadre d'une utilisation avec de forts courants. En effet, de tels commutateurs mécaniques nécessitent, pour être désolidarisés des segments d'alimentation, des forces d'autant plus importantes qu'ils sont parcourus par un courant fort et donnent lieu dans ce cas à des phénomènes d'arcs électriques peu souhaitables. Un dispositif de rappel des plots vers le bas apte à exercer de telles forces serait coûteux et difficile à introduire dans l'espace relativement réduit compris entres les segments et la ligne continue sous tension.

On a proposé, dans le brevet DE 4 329 935, un dispositif d'alimentation électrique pour véhicule électrique de type automobile à batteries.

Dans ce document, les segments d'une piste d'alimentation sont d'une longueur supérieure à celle de la voiture. Il est prévu de mettre sous tension le segment sur lequel se trouve le train arrière du véhicule, et de mettre à la terre le segment sur lequel se trouve le train avant du véhicule. Le courant d'alimentation passe alors entre le train arrière et le train avant par le moteur électrique du véhicule.

Ce dispositif présente l'inconvénient majeur selon lequel le segment sous tension dépasse largement du véhicule.

Ce dispositif présente donc des risques d'électrocution pour les piétons, ce qui le rend difficilement utilisable dans un endroit où des piétons peuvent être amenés à passer derrière le véhicule.

On observera ici que la mise à la masse prévue dans ce document ne pourrait pas être appliquée au système du document DE A-30 48 730 car ce dernier, pour pouvoir fonctionner, impose que le segment de rail adjacent au segment sous tension soit «en l'air», et donc non relié à la masse.

En outre, le système décrit dans DE-A 43 29 935 cause inévitablement des discontinuités dans l'alimentation, ce qui est fortement indésirable notamment dans le cas de véhicules alimentés sous fort courant.

La présente invention a pour but de pallier à ces inconvénients en proposant un dispositif sectionné d'alimentation par le sol dans lequel les segments d'alimentation sont entièrement situés sous le véhicule et où, de plus, tous les segments situés hors de l'emprise au sol du véhicule sont reliés à la terre.

Un autre but de l'invention est de proposer un dispositif d'alimentation par le sol dans lequel une défaillance de l'un quelconque de ses éléments constitutifs ne donne jamais lieu à une mise sous tension d'un segment non couvert par le véhicule.

Ce dispositif est particulièrement adapté pour l'alimentation d'un véhicule ferroviaire urbain sur voie publique tel qu'un tramway, mais également pour la réalisation d'un réseau d'alimentation de véhicules particuliers guidés par des utilisateurs de ces véhicules.

On a également proposé dans le document EP 761 493, un dispositif d'alimentation de véhicule basé sur une série de segments successifs prolongés vers le bas en forme de conducteurs circonférentiels. L'ensemble de ces conducteurs circonférentiels mis à bout à bout forme un tunnel dans lequel circule une langue flexible, portant sur sa face supérieure une ligne d'alimentation de puissance, et sur sa face inférieure une liaison à la terre. Lorsque le véhicule passe sur un segment, cette langue est magnétiquement attirée vers le haut, le conducteur de puissance venant au contact de la paroi supérieure de la circonférence conductrice, mettant le segment sous tension.

Les segments non attirés magnétiquement voient au contraire la langue les traversant contre leur paroi inférieure, mettant une telle circonférence conductrice en liaison avec la terre. Les segments alimentés sont exclusivement ceux qui se trouvent sous l'empreinte du véhicule.

Toutefois un tel dispositif n'est pas exempt des risques qu'un segment reste sous tension malgré la disparition du véhicule. L'objectif de l'invention est de proposer un dispositif d'alimentation du type à commutation de segment entre mise à la terre et mise sous tension qui présente des risques d'électrocution ides piétons quasi-inexistants. Cet objectif est atteint grâce à l'objet de la revendication 1.

Le dispositif selon l'invention pourra comporter facultativement l'une ou plusieurs des caractéristiques avantageuses specifiées dans les revendications dependantes.

D'autres caractéristiciues, buts et avantages de la présente invention apparaitront à la lecture de la description détaillée qui va suivre et en regard des dessins annexés donnés à titre d'exemple non limitatif et sur lesquels :
_ La figure 1 est une vue transversale à la direction de roulement d'un ensemble constitué d'un véhicule électrique, d'une piste d'alimentation, et d'une boucle électromagnétique de commande, conformes à un premier mode de réalisation de l'invention.
_ La figure 2 est une vue de dessus du même ensemble, où sont représentées schématiquement les parties du véhicule qui sont au contact des pistes ou qui interagissent avec les boucles de commande.
_ La figure 3 est un schéma électronique d'un module de commutation conforme au mode de réalisation des figures 1 et 2.
_ La figure 4 est une vue de dessous d'un ensemble constitué d'une piste d'alimentation, d'un ensemble de boucles électromagnétiques, et d'un véhicule électrique conformes au mode de réalisation de l'invention des figures 1 à 3.
_ La figure 5 est une vue transversale à la direction de roulement d'un ensemble constitué d'un véhicule électrique et d'une piste d'alimentation conformes à un deuxième mode de réalisation de l'invention.
_ La figure 6 est une vue de dessus du même ensemble, où sont représentées schématiquement les parties du véhicule qui sont au contact de la piste.
_ La figure 7 est un schéma électronique d'un module de commutation conforme au mode de réalisation des figures 5 et 6.
_ La figure 8 est une vue de dessous d'un ensemble constitué d'une piste d'alimentation et d'un véhicule électrique conformes au mode de réalisation de l'invention des figures 5 à 7.
_ La figure 9 est une vue transversale à la direction de roulement d'un ensemble constitué d'un véhicule électrique, d'une piste d'alimentation, d'une piste de commande et d'un rail de guidage conformes à un troisième mode de réalisation de l'invention.
_ La figure 10 est une vue de dessous du même ensemble, où sont représentées schématiquement les parties du véhicule qui sont au contact des pistes.
_ La figure 11 est un schéma électronique d'un module de commutation conforme au mode de réalisation des figures 9 et 10.
_ La figure 12 est une vue de côté d'un rail d'alimentation conforme à l'invention, sur lequel sont disposés divers espacements caractéristiques entre les différents éléments constitutifs d'un dispositif selon l'invention.
_ Les figures 13a à 13h sont chacune une vue de dessus d'un ensemble constitué de pistes d'alimentation et de commande, et d'un véhicule électrique, à des étapes successives de progression du véhicule le long de ces pistes.

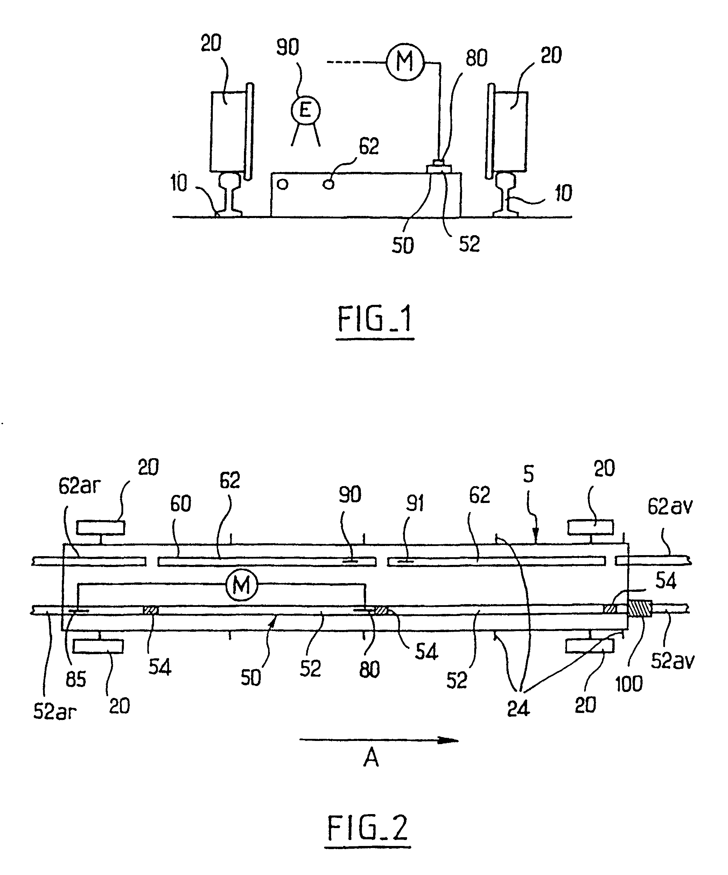

On a représenté sur la figure 1 une vue transversale de la région voisine d'une piste d'alimentation 50 d'un véhicule électrique 5 guidé qui est en l'espèce une motrice de tramway.

Deux rails 10 reçoivent sur leur face supérieure des roues porteuses 20 du véhicule 5.

Les rails 10 sont disposés dans des gorges réalisées dans la chaussée, de largeur sensiblement supérieure à celle d'un rail 10, et sensiblement de même hauteur que le rail 10, de sorte que ce dernier affleure en partie supérieure de ces gorges.

La piste d'alimentation 50 s'étend parallèlement aux rails 10, entre ceux-ci. La piste 50 peut présenter une épaisseur faible car elle a un rôle de conduction de l'électricité, et non un rôle mécanique.

Dans le mode de réalisation non limitatif décrit ici où le véhicule est un véhicule sur rails, la piste 50 peut présenter une largeur faible. Toutefois, le dispositif décrit ci-après est facilement adaptable à une installation d'alimentation de véhicules personnels dirigés par un utilisateur. Dans un tel cas, la piste d'alimentation 50 présente préférentiellement une largeur suffisamment importante pour autoriser des écarts latéraux du véhicule sans que le contact entre le véhicule et la piste 50 ne soit coupé. Selon une variante, on adopte des frotteurs de largeur suffisante pour rester en contact avec la piste d'alimentation malgré d'éventuels écarts.

Le rail d'alimentation 50 a pour rôle d'alimenter en tension un moteur M du véhicule. Ce moteur M est ainsi relié par une première borne à un frotteur d'alimentation 80 solidaire du véhicule, apte à glisser sur la face supérieure du rail d'alimentation 50.

Comme représenté sur la figure 2, le rail d'alimentation 50 est constitué d'une série de segments 52 de longueur constante disposés bout à bout et séparés par des joints isolants 54.

La seconde borne du moteur M, non représentée sur la figure 1, est reliée à un patin de frottement 85 disposé à l'arrière du véhicule, ce patin étant lui-même en contact avec la piste d'alimentation 50, pour assurer le retour de courant comme cela sera expliqué ci-dessous.

Le dispositif des figures 1 à 4 présente également un ensemble de boucles 62 conductrices noyées dans le sol entre les deux rails 10. Chacune de ces boucles 62 s'étend parallèlement aux rails 10 et présente une largeur, mesurée perpendiculairement aux rails 10, qui est sensiblement égale au quart d'un écartement séparant les deux rails 10.

L'ensemble formé des rails 10, des boucles 62 et de la piste d'alimentation 50 est monté dans une assise en béton.

Le boucles 62 sont réparties bout-à-bout le long des rails 10. Plus précisément, les boucles 62 présentent chacune une longueur mesurée parallèlement aux rails 10 qui est égale à la longueur des segments 52 de la piste d'alimentation 50, et sont disposées de façon à ce qu'il existe entre deux extrémités adjacentes de deux boucles consécutives une distance sensiblement égale à la longueur d'un joint isolant 54.

Plus précisément, les boucles 62 sont réparties le long des rails de la même façon que les segments 52 de la piste de conduction 50, les extrémités des boucles 62 se trouvant aux mêmes endroits le long des rails que les extrémités des segments 52.

Dans le véhicule 5 sont embarqués deux émetteurs de signaux magnétiques 90 et 91, disposés de façon à émettre chacun un champ se propageant sous le véhicule, en direction du sol, et sur une étendue limitée sous le véhicule.

Ces émetteurs sont de manière préférentielle de émetteurs comportant chacun une boucle de courant, ces boucles de courant étant parcourues par un courant généré à bord du véhicule.

Plus précisément, dans un mode de réalisation préférentiel de l'invention, les émetteurs 90 et 91 sont disposés sous le véhicule, en regard des boucles 62, et émettent chacun un champ qui ne s'étend le long du véhicule que sur une longueur qui est négligeable devant la longueur des boucles 62.

Sur la figure 2, on a ainsi représenté les émetteurs, en vue de dessus, par des rectangles dont la longueur correspond à l'étendue du champ magnétique émis par l'émetteur considéré.

Les émetteurs 90 et 91 sont réalisés sous forme de boucles parcourues par un courant alternatif, de sorte que le champ magnétique émis est un champ alternatif.

Selon une variante de l'invention, les émetteurs 90 et 91 peuvent être des émetteurs de champ électromagnétique.

La disposition des émetteurs 90 et 91 est illustrée sur la figure 2. Sur la figure 2, l'emprise au sol du véhicule est représentée par un rectangle 5, l'avant et l'arrière du véhicule étant définis par rapport au sens de la marche indiqué par une flèche A.

Comme on le décrira plus en détail par la suite, la présence de l'un des émetteurs 90, 91 (en permanence en émission) au droit d'une boucle 62 a pour effet de provoquer la mise en tension continue à 750 volts du segment d'alimentation 52 qui est au même niveau que cette boucle.

Ainsi, les deux émetteurs 90 et 91 définissent respectivement les extrémités arrière et avant d'une zone d'activation qui est telle que tout segment 52 partiellement engagé dans cette zone est mis sous tension d'alimentation.

La longueur du frotteur d'alimentation 80, mesurée parallèlement à la direction de déplacement du véhicule, est avantageusement plus grande que la longueur des joints d'isolation 54. De cette manière, le frotteur d'alimentation 80 quitte un segment d'alimentation 52 alors qu'il est déjà en contact avec le segment 52 suivant, qui est déjà alimenté comme expliqué par la suite.

On obtient ainsi une alimentation permanente, sans rupture, du véhicule, la transition d'un segment 52 à l'autre s'effectuant de manière progressive et en évitant les phénomènes d'amorçage et d'arcs électriques.

Un tel pontage de l'isolant peut également être obtenu en remplaçant le frotteur long 80 par deux frotteurs ponctuels implantés par exemple aux points où se trouvent les deux extrémités du frotteur long 80, et reliés électriquement entre eux. Dans un tel cas, les deux frotteurs ont avantageusement une longueur plus petite que la longueur des joints isolants 54 situés entre les segments d'alimentation 52.

Les émetteurs avant 91 et arrière 90 sont respectivement décalés en avant et en arrière du frotteur d'alimentation 80, de sorte que lorsque le frotteur d'alimentation 80 arrive en attaque d'un joint 54 comme représenté à la figure 2, l'émetteur de commande avant 91 se trouve d'ores et déjà à l'aplomb de la boucle 62 suivante (et donc le segment 52 suivant du rail d'alimentation est alimenté), tandis que l'émetteur de commande arrière 90 continue à émettre à travers la boucle précédente 62, et donc que le segment 52 précédent est encore sous tension d'alimentation. Ce segment précédent reste sous tension au moins jusqu'à ce que le frotteur d'alimentation 80 ait effectivement quitté ce segment.

On définit la durée de commutation d'un segment d'alimentation comme étant la durée qui sépare la première réception à travers une boucle 62 d'un champ magnétique émis par un émetteur 90 ou 91 et la mise sous tension continue à 750 volts du segment d'alimentation 52 qui est couplé à cette boucle 62.

Plus précisément, la distance d1 séparant le bord avant du frotteur d'alimentation 80 et le bord avant 91a de l'étendue du champ émis par l'émetteur avant 91 doit être choisie supérieure à la durée de commutation d'un segment d'alimentation, multipliée par la vitesse maximale du véhicule.

De cette façon, on s'assure que, lorsque le frotteur d'alimentation 80 vient en contact avec un segment d'alimentation, ce dernier est bien déjà porté à 750 volts et ce, pour toute vitesse de déplacement du véhicule.

Sur la figure 2, deux boucles de commande 62 sont représentés dans leur totalité et deux autres boucles, l'une en avant 62av et l'autre en arrière 62ar, sont représentées partiellement.

Comme on l'expliquera plus en détail par la suite, un segment 52 dont la boucle 62 correspondante n'est pas traversée par un champ magnétique de commande émis par l'un des émetteurs 90 ou 91, n'est pas alimenté, mais est relié à la terre ou plus généralement à une ligne de retour de courant.

Le véhicule comporte un frotteur arrière 85 en contact avec le rail d'alimentation 50. Le frotteur arrière 85 est lié à une borne du moteur électrique M qui est opposée à la première borne reliée au patin 80.

La distance séparant le bord avant du frotteur arrière 85 et le bord arrière de l'émetteur de commande arrière 90 est supérieure à la longueur d'un segment d'alimentation, de sorte que le frotteur arrière 85 n'est jamais en contact avec un segment 52 qui est sous tension. Ainsi le frotteur 85 est en permanence et quelle que soit la position du véhicule, relié à la terre.

Le moteur M est donc relié par l'une des ses bornes à un segment 52 alimenté et par l'autre de ses bornes à une segment 52ar relié à la terre.

Le véhicule possède en outre un dispositif de nettoyage 100 disposé à son extrémité avant, qui débarrasse le rail d'alimentation 50 de l'eau ou des détritus qui peuvent le recouvrir. Ce dispositif est par exemple du type soufflant.

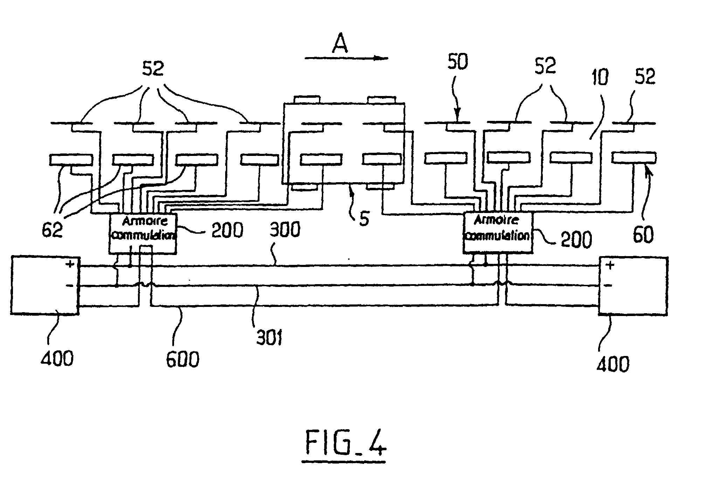

On a représenté, sur la figure 4, une vue générale sous forme de blocs fonctionnels du dispositif d'alimentation conforme à la présente invention.

Les segments 52 sont reliés individuellement à des armoires de commutation 200.

Plus précisément, chaque armoire de commutation est, d'une part, reliée séparément à une série de par exemple cinq segments 52 consécutifs et, d'autre part, à une ligne d'alimentation 300 qui circule le long de la voie.

La ligne d'alimentation 300 est séparée en portions de ligne dont les extrémités sont connectées à des sous-stations 400, de façon classique en soi. Entre deux sous-stations 400 circulent également un fil pilote de sécurité 600, qui passe par chacune des armoires de commutation 200, ainsi qu'une ligne de retour de courant 301 qui est préférentiellement reliée à la terre, mais qui peut être également reliée à un potentiel négatif des sous-stations 400.

Chaque armoire de commutation 200 comprend par exemple cinq modules de commutation reliés chacun à une boucle de commande 62 donnée et à un segment d'alimentation 52 associé, tous deux côte-à-côte.

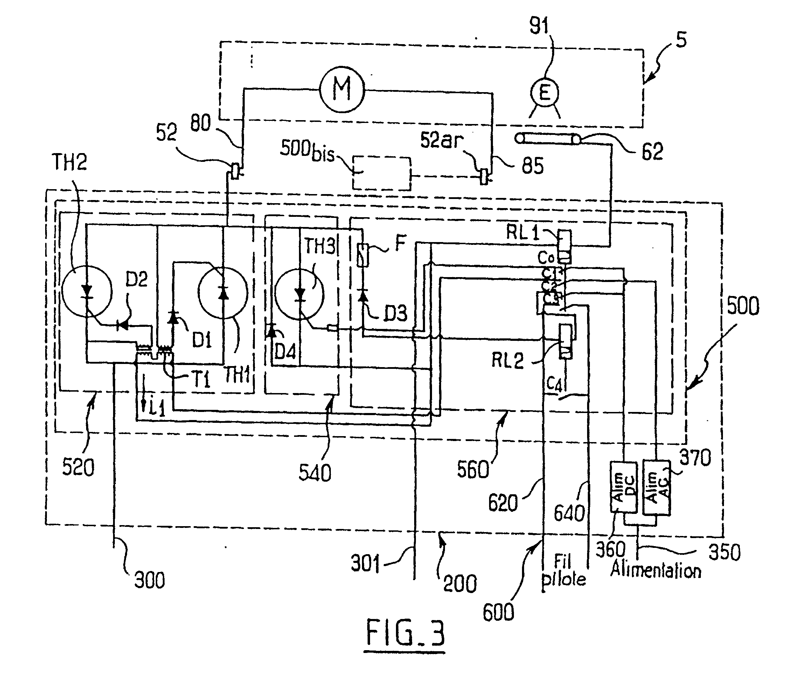

La figure 3 représente un circuit électrique correspondant au mode de réalisation préférentiel d'un tel module de commutation.

Plus précisément, la figure 3 représente une armoire de commutation dans laquelle un seul module de commutation a été représenté ainsi que les liaisons de ce module de commutation avec un segment d'alimentation 52 et avec la boucle de commande 62 correspondante.

Le module de commutation 500 et l'armoire de commutation 200 sont symbolisés par des rectangles en trait pointillé.

On retrouve, en partie supérieure du module 500 sur la figure 3, ses liaisons avec le segment d'alimentation 52 et avec la boucle de commande 62.

En partie basse de la figure, le module est relié à la ligne d'alimentation 300 et à la ligne de retour de courant 301 qui est avantageusement reliée à la terre. Il est relié également à une ligne d'alimentation 350 sous 220 volts alternatifs par l'intermédiaire d'un bloc d'alimentation continue 360 d'une part, et par un bloc d'alimentation alternative 370, d'autre part.

On retrouve également le fil pilote 600 à deux brins, et plus précisément une branche d'entrée 620 dans le module et une branche de sortie 640 de ce dernier.

On assure, dans cet exemple de réalisation, une double coupure du fil pilote (fil pilote à quatre brins), en ajoutant un contact au relais RL1 et au relais RL2, le fil pilote formant une seconde boucle munie de deux interrupteurs en parallèle disposés chacun sous l'un de ces interrupteurs supplémentaires. La double coupure du fil pilote permet de limiter le risque qu'un détecteur de courant disposé sur le fil pilote et apte à commander un dispositif de disjonction ne mesure un courant dû par exemple à une mise à la terre accidentelle du fil pilote, alors que celui-ci est coupé.

On distingue à l'intérieur du module de commutation 500 trois sous-ensembles ayant chacun une fonction qui lui est propre.

Ces trois sous-ensembles sont : un ensemble d'alimentation qui relie un interrupteur de puissance 520 entre le segment d'alimentation 52 et la ligne 300 d'alimentation à 750 volts ; un ensemble interrupteur de puissance 540 pour mise à la terre entre le segment d'alimentation 52 et une ligne de retour courant 301 ; un ensemble 560 de commande des ensembles 520 et 540 et de disjonction générale.

La disjonction générale mentionnée ici signifie l'ouverture du fil pilote 600 qui provoque une disjonction de la ligne d'alimentation 300, par des moyens connus et non représentés sur la figure 3 et intégrés dans la sous-station 400 représentée sur la figure 4.

L'ensemble interrupteur d'alimentation 520 comprend un dispositif de commutation à semi-conducteur d'alimentation TH1 monté dans le sens passant de la ligne d'alimentation 300 au segment d'alimentation 52.

La gâchette du thyristor TH1 est reliée à sa cathode par l'intermédiaire d'un enroulement secondaire d'un transformateur (LS) T1 monté en série avec une diode D1, qui est montée dans le sens passant de l'enroulement vers la gâchette du thyristor.

En parallèle avec le thyristor TH1, est prévu un thyristor de récupération d'énergie TH2. Le thyristor TH2 est monté dans le sens passant du segment d'alimentation 52 vers la ligne d'alimentation 300.

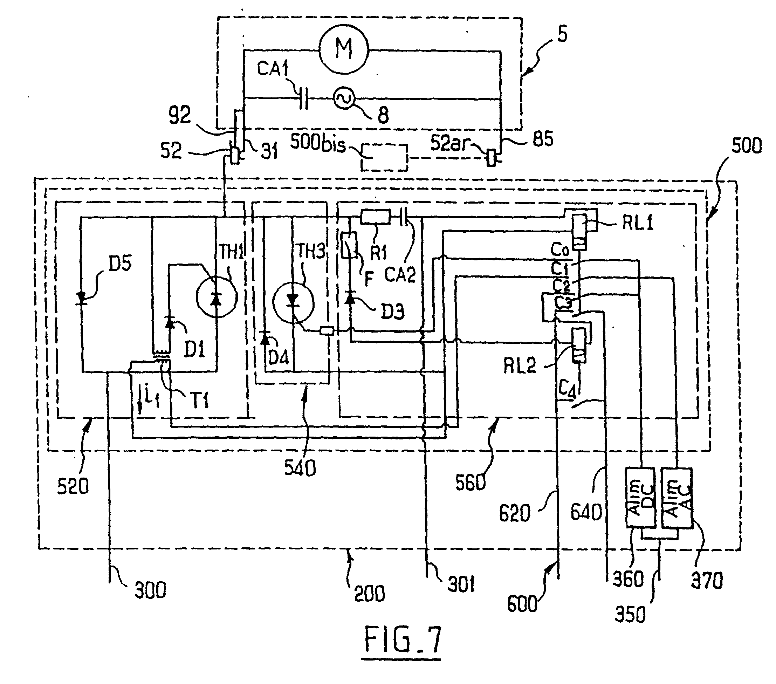

Il peut être remplacé par une diode D5 montée dans le sens passant du segment 52 vers la ligne d'alimentation 300, comme représenté sur le schéma de la figure 7.

La gâchette du thyristor TH2 est reliée à sa cathode par l'intermédiaire d'un second enroulement secondaire du transformateur T1 en série avec une diode D2 montée passante de l'enroulement vers la gâchette du thyristor TH2.

Le transformateur T1 présente donc un seul enroulement primaire pour deux enroulements secondaires.

Pour chacun des thyristors TH1 et TH2, on comprend donc que lorsqu'un courant alternatif parcourt l'enroulement primaire du transformateur T1, une tension alternative est obtenue aux bornes des deux enroulements secondaires du transformateur T1.

Par l'action des diodes D1 et D2, on obtient alors un courant unidirectionnel dans des enroulements secondaires du transformateur T1.

Les thyristors TH1 et TH2 sont alors rendus conducteurs.

On comprend donc que l'ensemble 520 constitue un interrupteur entre l'alimentation 300 et le segment 52, qui est commandé par un courant alternatif d'entrée traversant un contact C1 commandé, comme on le verra plus loin.

L'ensemble interrupteur de mise à la terre 540 comprend un thyristor TH3 monté passant entre le segment d'alimentation 52 et la ligne de retour courant 301.

Dans un tel cas de retour de courant par une ligne de retour de courant 301 appelée également feeder selon une terminologie anglophone, une diode D4 est avantageusement montée en parallèle avec le thyristor TH3 dans le sens passant du feeder de retour 301 vers le rail d'alimentation 52.

Lorsqu'un courant de freinage circule du moteur du véhicule vers la ligne d'alimentation 300 à travers la borne 81 et le thyristor TH2, ce courant provient, à une borne opposée 85 du moteur, d'un segment 52ar qui n'est pas alimenté. Ce courant traverse ainsi un module 500 auquel est relié le segment 52ar, à travers la diode D4, le thyristor TH1 étant bloquant dans ce segment 52ar.

On comprend donc que lorsque la gâchette du thyristor TH3 est alimentée par un courant continu, le segment 52 ne peut être à une tension supérieure de celle du retour de courant 301. Le segment est alors au potentiel zéro lorsque la ligne 301 est reliée à la terre.

L'ensemble de commande 560 comporte deux relais RL1 et RL2.

Les bornes de la bobine du relais RL1 sont reliées, d'une part à la boucle de commande 62, d'autre part à la ligne de retour 301.

Le relais RL1 comporte quatre contacts C0, C1, C2, C3.

Le contact C0 est apte à sélectivement relier la sortie du générateur de courant continu 360 à la gâchette du thyristor de mise à la terre TH3.

Le contact C1 est apte à sélectivement relier la sortie du générateur de courant alternatif 370 à une borne de l'enroulement primaire du transformateur T1, la seconde borne de cet enroulement primaire étant reliée à la terre.

Le relais RL1 est un relais adapté pour être commandé par une tension alternative.

Les contacts C0 et C1 sont tels que lorsque le relais RL1 est alimenté par une tension de commande alternative générée par l'émission d'un champ magnétique alternatif à travers la boucle 62 par l'émetteur 91, le contact C0 est ouvert et le contact C1 est fermé, de sorte que le segment d'alimentation 52 est relié à la ligne d'alimentation 300 et le thyristor de mise à la terre TH3 est bloquant.

A l'inverse, lorsqu'aucun champ magnétique n'est appliquée à travers la boucle 62, le contact C0 est fermé et le contact C1 est ouvert, de sorte que le segment 52 est relié à la terre et la liaison entre le segment d'alimentation 52 et la ligne d'alimentation 300 est coupée.

On décrira maintenant un sous-ensemble de l'ensemble de commande 560 qui comprend notamment les contacts C2, C3, le relais RL2 et la portion du fil pilote 600 qui se trouve à l'intérieur du module de commutation 500.

Le rôle de ce sous-ensemble est de réaliser une coupure du fil pilote 600 lorsqu'une déficience du thyristor de mise à la terre TH3 ou du générateur de courant continu 360 qui l'alimente intervient.

Le fil pilote 600 se sépare en deux branches parallèles à l'intérieur du module de commutation 500 ; chaque branche porte un contact. Ces contacts sont respectivement le contact C3 du relais RL1 et un unique contact C4 du relais RL2.

L'entrée de commande du relais RL2 est reliée au générateur de courant continu 360 par l'intermédiaire du contact C2 commandé par le relais RL1.

Les deux interrupteurs C3 et C4 du fil pilote sont tels que lorsque le relais RL1 est alimenté, le contact C3 est fermé, et lorsque le relais RL2 est alimenté, le contact C4 se ferme, de sorte que pour que le fil pilote ne soit pas coupé, au moins l'un des deux relais RL1 et RL2 doit être alimenté.

Le circuit de commande du relais RL2 part de la sortie du générateur de courant continu 360 et rejoint une borne de liaison du module avec le segment d'alimentation 52.

Entre ces deux points, il comporte en série le contact C2, la bobine relais RL2, une diode D3 dans le sens passant et un fusible F.

On comprend donc que le relais RL2 n'est alimenté qu'à condition que le contact C2 soit fermé et que le thyristor TH3 soit conducteur, c'est-à-dire que le segment d'alimentation soit à la masse.

Le contact C3 est tel qu'il est ouvert lorsque le relais RL1 n'est pas alimenté.

Le fonctionnement normal de l'ensemble de commande 560 est le suivant :

Lorsqu'aucun émetteur du véhicule n'est présent au dessus de la boucle 62, le relais RL1 n'est pas alimenté. Le contact C0 est alors fermé de sorte que le thyristor TH3 de mise à la terre est passant ; le contact C1 est ouvert de sorte que les thyristors d'alimentation TH1 et de récupération TH2 sont bloqués.

Le contact C2 est, quant à lui, fermé. Le thyristor TH3 étant passant, le relais RL2 est alimenté et le contact C4 est donc fermé, de sorte que le fil pilote est conducteur. Le contact C3 est lui ouvert.

Lorsqu'un véhicule transmet une tension alternative au relais RL1 par l'intermédiaire de l'émetteur 91 ou de l'émetteur 90 à travers la boucle 62, les contacts C0 et C1 sont respectivement ouvert et fermé, de sorte que le segment d'alimentation 52 est porté à une tension de 750 volts, par le thyristor TH1, et qu'un courant d'alimentation est libre de circuler de la ligne d'alimentation 300 vers le segment 52 à travers le thyristor TH1. Un courant de freinage est, quant à lui, libre de circuler dans le sens inverse à travers le thyristor TH2.

Les contacts C2 et C3 sont respectivement ouvert et fermé.

Le relais RL2 n'est alors pas alimenté.

Le fil pilote est maintenu continu grâce au contact C3 qui est fermé, le contact C4 étant ouvert.

On va maintenant décrire le fonctionnement dynamique de l'ensemble. A l'arrivée du véhicule 5, l'émetteur de commande avant 91 commence à appliquer une tension alternative aux bornes de la bobine du relais RL1, via la boucle 62.

Le contact C0 est alors ouvert, permettant le désamorçage et le blocage du thyristor TH3 de mise à la masse.

La fermeture du contact C1 provoque la mise sous tension alternative du transformateur T1. Les thyristors TH1 et TH2 sont alors rendus conducteurs, permettant l'alimentation traction du véhicule à travers TH1 ou la récupération d'énergie de freinage à travers TH2 après un retard, assuré par l'induction du transformateur T1, permettant le désamorçage complet du thyristor TH3.

Lorsque le véhicule a avancé jusqu'à ce que le frotteur d'alimentation 80 passe hors du segment de rail d'alimentation 52 (alors que l'émetteur de commande arrière 90 est toujours en vis-à-vis avec la boucle 62), les courants de traction et de freinage à travers respectivement les thyristors TH1 et TH2 disparaissent, permettant ainsi le désamorçage des thyristors TH1 et TH2. Le véhicule 5 continuant d'avancer, l'émetteur de commande arrière 90 sort de la boucle 62, ce qui provoque le basculement du relais RL1 et l'ouverture du contact C1. Le contact C0 est lui fermé, rendant passant le thyristor de mise à la masse TH3, après un retard approprié permettant au préalable le désamorçage complet de thyristors TH1 et TH2.

La fermeture du contact C2, lors de ce basculement, permet l'alimentation de la bobine du relais RL2 et la fermeture du contact C4, assurant ainsi la continuité du fil pilote 600 (le contact C3 s'étant quant à lui ouvert).

Compte tenu du fonctionnement du module 500 et compte-tenu de la disposition des différents frotteurs et émetteurs, le frotteur 80 est en permanence en contact avec un segment sous tension d'alimentation, et le frotteur arrière 85 est en permanence en contact avec un segment 52ar relié à un module 500bis semblable à celui qui vient d'être décrit et qui, lui, relie le segment 52ar à la ligne de retour de courant 301, qui est avantageusement la terre.

On va maintenant décrire en détail la façon dont le circuit décrit ci-dessus permet de gérer un certain nombre d'anomalies (modes dégradés), afin de garantir dans tous les cas la sécurité de l'installation.

Le circuit permet tout d'abord d'éviter toute mise sous tension accidentelle d'un segment de rail d'alimentation 52 en dehors de la présence d'un véhicule transmettant un champ magnétique alternatif sur la boucle de commande 62.

Ceci peut se produit en cas de claquage des thyristors TH1 et TH2, ou encore si une boucle 62 est mal isolée d'une boucle voisine qui, elle, est traversée par un champ magnétique alternatif. Un courant de court-circuit circule alors à travers le thyristor TH3.

Les sous-stations encadrantes 400 sont alors normalement disjonctées.

Si, dans cette situation, le thyristor TH3 est défaillant et reste à l'état bloqué,

alors le courant d'alimentation du relais RL2 est nul, ce qui ouvre le contact C4. Le contact C3 étant lui aussi ouvert du fait de l'absence d'une tension de commande aux bornes du relais RL1, le fil pilote est alors sectionné, et il y a alors également dans ce cas disjonction des sous-stations encadrantes 400.

Un autre défaut possible est le claquage de la diode D3, de sorte qu'elle soit passante dans les deux sens. Dans ce cas, au moment de la mise sous tension du segment d'alimentation 52, il y a court-circuit entre la sortie du générateur de courant continu 360, qui est à une tension de 24 volts, et le segment d'alimentation 52 qui est à 750 volts.

Il y a alors fusion du fusible F, et ouverture du contact C4 du relais RL2.

Lorsque le véhicule disparaît, le relais RL1 bascule et ce sont les deux contacts C3 et C4 qui sont alors ouverts. Le fil pilote est coupé et il y a disjonction des sous-stations encadrantes.

A propos des relais RL1 et RL2, ceux-ci sont de manière préférentielle des relais de sécurité agréés pour des applications mettant en jeu la vie des personnes, similaires à ceux utilisés dans le domaine de la signalisation ferroviaire. Ils sont garantis pour adopter un état prédéterminé en cas de dysfonctionnement.

Ainsi, toute panne d'un des deux relais se traduit par l'ouverture du contact situé sur le fil pilote et commandé par ce relais. De la sorte, il y a coupure du fil pilote dès que le relais en question est défaillant, et son non-fonctionnement ne peut donc pas entraîner d'autre incident que la disjonction des sous-stations encadrantes.

Par ailleurs, en cas de panne de l'alimentation continue 360 à basse tension, le relais RL2 n'est plus alimenté en dehors de la présence du véhicule, le contact C4 reste ouvert et il y a donc disjonction par rupture du fil pilote 600 dès que le contact C3 est lui aussi ouvert.

En cas de panne de l'alimentation alternative 370, le transformateur T1 n'est plus alimenté, les courants de gâchette des thyristors d'alimentation TH1 et de récupération TH2 restent nuls, il n'y a donc plus d'alimentation du segment d'alimentation 52.

Enfin, d'une manière générale, toute discontinuité de la partie de circuit reliant le segment d'alimentation 52 à la terre se traduit par une chute du relais RL2, et par une coupure du fil pilote et une disjonction des sous-stations encadrantes dès que le véhicule quitte le segment.

Le dernier danger résiduel est un défaut d'isolement entre la chaussée et le segment d'alimentation, lors du passage du véhicule. A cet effet le véhicule peut être équipé de tresses de masse sur le périmètre de la couverture de sol qu'il constitue.

Naturellement, tous les composants sont choisis pour obtenir la meilleure fiabilité.

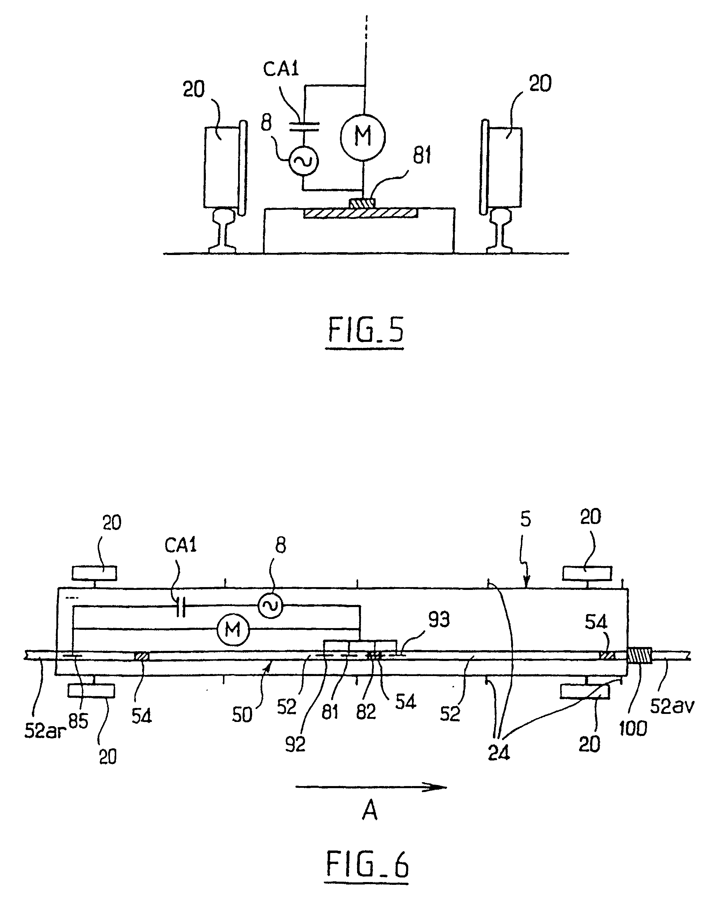

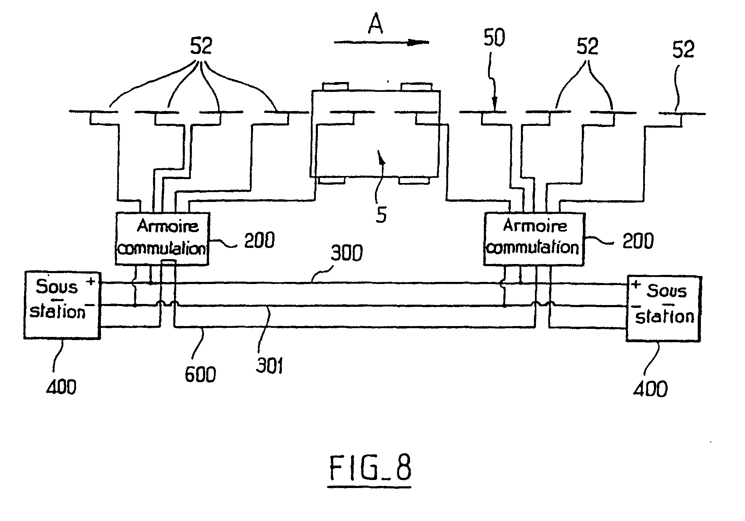

Dans une deuxième variante de l'invention représentée sur les figures 5 à 8, la fonction assurée par les boucles 62, c'est-à-dire la réception d'un signal généré à bord du véhicule, et sa transmission à un ensemble de commande de commutation, est assurée par le rail d'alimentation 50 lui-même.

Sur ces figures, les éléments identiques ou similaires à ceux du dispositif précédemment décrit sont désignés par les mêmes signes de référence et ne seront pas décrits à nouveau.

Dans ce mode de réalisation, le véhicule présente quatre frotteurs en contact avec des segments du rail unique 50 d'alimentation et de commande. Deux frotteurs 81 et 82 ont pour fonction de collecter l'énergie électrique provenant d'une ligne d'alimentation à haute tension, et deux autres frotteurs 92 et 93 ont pour fonction de transmettre une tension de commande du véhicule 5 vers un ensemble de commande 560 du module de commutation 500.

Dans une variante, le véhicule 5 peut ne comporter qu'un seul frotteur long d'alimentation, comme dans le cas du dispositif des figures 1 à 4. Dans une autre variante, le véhicule peut ne comporter qu'un seùl frotteur constituant à la fois frotteur de commande et frotteur d'alimentation.

Comme on peut le voir sur les figures 5 et 6, les frotteurs 81, 82, 92 et 93 sont directement reliés électriquement les uns aux autres, et le véhicule comporte, en parallèle avec le moteur M, un générateur de courant alternatif 8 monté en série avec une capacité CA1.

Le circuit électronique du module de commutation 500 représenté sur la figure 7 diffère de celui de la figure 3 en ce que la borne du relais RL1, qui était reliée à la boucle de commande 62 est maintenant reliée au segment d'alimentation et de commande 52 par l'intermédiaire d'une capacité CA2 et d'une résistance de limitation R1.

La disposition des frotteurs 81, 82, 92, 93 et 85 est telle que, à tout moment, les frotteurs d'alimentation 81 et 82 sont tous deux en contact avec un segment alimenté, et que le frotteur de retour de courant 85 est à tout moment en contact avec un segment 52 relié à la terre.

Le courant alternatif généré par le générateur 8 est véhiculé par l'intermédiaire d'un des deux frotteurs 92 ou 93, le frotteur 92 dans l'exemple de la figure 7, à travers la résistance R1, la capacité CA2, et le relais RL1. Le courant alternatif généré par le générateur 8 a le même effet sur le relais RL1 que la tension alternative appliquée par l'intermédiaire de la boucle 62 dans le mode de réalisation de la figure 3. La tension alternative fournie par le générateur 8 se superpose à la tension d'alimentation du segment 52 lorsque celui-ci est alimenté, le condensateur CA2 et la résistance R1 ne transmettant que le signal alternatif au relais RL1 de sorte que le relais est protégé de la tension d'alimentation.

Le retour de courant du moteur M se fait à travers le frotteur arrière 85 dans cet exemple. Toutefois, on peut prévoir selon l'invention d'adopter un rail ou une piste de retour de courant longeant le rail d'alimentation 50, le véhicule comportant un frotteur de retour de courant remplaçant le frotteur 85 et en contact permanent avec ce rail de retour de courant.

De même, on prévoit selon l'invention que les courants de commande et d'alimentation peuvent être véhiculés à travers certaines roues porteuses en contact avec un rail porteur. Dans ce cas, les autres roues en contact avec le rail de commande et d'alimentation seront préférentiellement entourées d'une couche isolante ou plus généralement isolées de la caisse, de manière à ne véhiculer aucun courant électrique entre le véhicule et le rail d'alimentation.

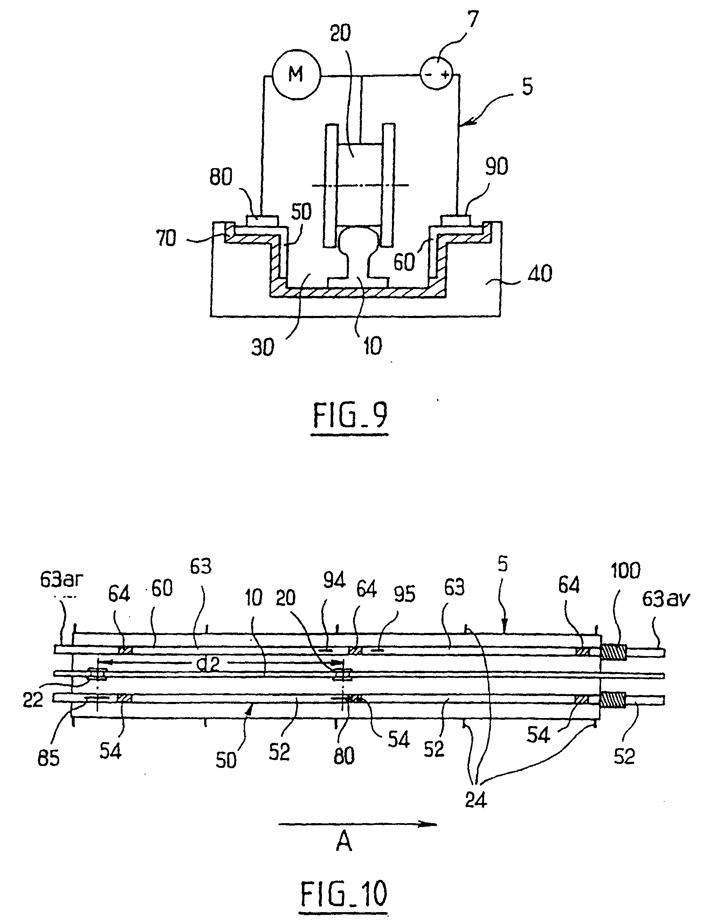

Dans une troisième variante de l'invention représentée sur les figures 9 à 11, on prévoit un dispositif muni d'une piste d'alimentation 50 conforme à celle de la première variante des figures 1 à 4, d'un rail de guidage 10 relié à la terre et assurant le retour de courant, et muni également d'une piste de commande 60 parallèle à la piste d'alimentation 50 et constituée de segments 63 de même longueur que les segments 52 et disposés aux mêmes niveaux le long du trajet du véhicule.

Le rail de guidage est ici un rail central, disposé sous le véhicule entre des roues latérales porteuses de celui-ci, qui sont par exemple des roues à pneumatiques.

Dans cette variante, le véhicule 5 est muni de deux frotteurs 94 et 95 disposés de part et d'autre du frotteur d'alimentation 80 le long du trajet du véhicule et décalés latéralement par rapport au frotteur 80 de manière à être ne contact avec la piste de commande 60 quand le frotteur 80 est en contact avec le rail d'alimentation 50.

Dans cette variante, un segment d'alimentation 52 est mis sous tension d'alimentation lorsqu'un segment de commande 63 qui lui correspond est alimenté par une tension alternative transmise depuis le véhicule 5 à travers au moins un des deux frotteurs 94 ou 95.

Ainsi, les frotteurs 94 et 95 remplissent les mêmes fonctions que les émetteurs 90 et 91 de la variante des figures 1 à 4, et les segments de commande 63 remplissent les mêmes fonctions que les boucles 62 du dispositif des figures 1 à 4.

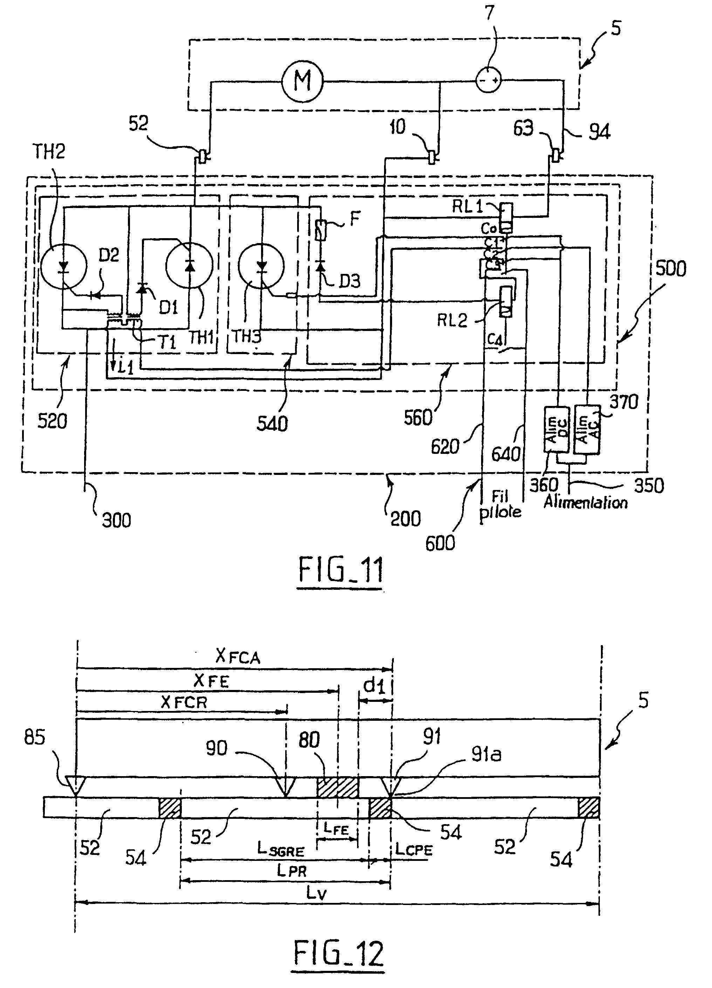

On a représenté sur la figure 11 un schéma de montage d'un module de commutation d'un tel dispositif.

Ce schéma diffère des schémas des deux variantes précédentes par le fait que le moteur M du véhicule est en contact, par une de ses bornes destinée au retour de courant, avec un rail continu de retour de courant 10, et non avec un segment 52ar du rail d'alimentation 50 qui est relié à la terre. De même, le module de commutation est ici mis en contact avec la terre par l'intermédiaire du rail 10.

Par ailleurs, le relais RL1 est ici un relais destiné à recevoir un courant continu qui lui est transmis par l'intermédiaire d'un des deux frotteurs de commande 94 ou 95, le frotteur 94 dans l'exemple de la figure 11.

Ainsi , le véhicule 5 porte un générateur de tension continue, ici de 24 volts, apte à imprimer une différence de potentiel entre le rail 10 de mise à le terre et le segment de commande 63.

Dans cette variante de réalisation, on dispose avantageusement les frotteurs de commande 94 et 95 au même niveau par rapport à la direction de la marche et en référence au frotteur d'alimentation 80, que les émetteurs 90 et 91 de la première variante des figures 1 à 4.

Bien entendu, l'invention prévoit de réaliser un dispositif d'alimentation comportant un rail de retour de courant avec un dispositif de commande comportant des boucles conductrices et des émetteurs magnétiques, de réaliser un dispositif comportant un rail de retour et dans lequel la commande est effectuée par un courant alternatif sur le rail d'alimentation, ou encore de réaliser un dispositif avec retour de courant à travers des segments d'alimentation reliés à la terre avec un dispositif de commande par l'intermédiaire d'un rail de commande différent du rail d'alimentation.

L'invention s'étend à toute association des dispositions décrites ci avant.

On prévoit selon l'invention de relier une borne de retour de courant du moteur à deux frotteurs de retour de courant, l'un disposé de la même façon que le frotteur 85 précédemment décrit, l'autre disposé en avant de la zone d'activation, à une distance de l'extrémité avant de cette zone qui est supérieure à la longueur d'un segment d'alimentation.

Le fait de munir le véhicule de deux frotteurs de retour permet de limiter des risques qu'une coupure du courant de retour ne se produise, par rupture du contact entre un unique frotteur et la ligne d'alimentation, ou encore par une non mise à la terre accidentelle d'un rail arrière.

On décrira ci-après une disposition particulière des différents frotteurs et émetteurs sous le véhicule, et une géométrie des segments de rails, qui permettent conjointement d'assurer l'alimentation et la mise à la masse des segments d'alimentation dans les conditions prévues.

On a ainsi représenté sur la figure 12 deux segments d'alimentation référencés 52 et isolés entre eux par des joints 54.

On a également représenté sur cette figure deux émetteurs de commande 90 et 91 et un frotteur d'alimentation 80 en reprenant les mêmes références que pour la version des figures 1à 4.

Cette figure propose une disposition des émetteurs 90 et 91 en référence à la position du patin d'alimentation 80 qui n'est pas seulement avantageuse dans le cas du dispositif des figures 1 à 4. Elle s'adresse également aux dispositifs décrits en rapport aux figures 5 à 11, en remplaçant les référence numériques 90 et 91 respectivement par les références 92 et 93 ou respectivement par les références 94 et 95.

En effet, les frotteurs de commande de la deuxième et de la troisième variante remplissent la même fonction que les émetteurs 90 et 91 de la première variante, celle de provoquer l'alimentation d'un segment 52 disposé au même niveau qu'au moins un de ces frotteurs par rapport à la marche.

Ainsi, la géométrie du dispositif proposée à la figure 12 est avantageusement adoptée au sein de l'un quelconque des dispositifs précédemment décrits.

De même, on peut remplacer le frotteur 80 de la figure 12 par un ensemble de deux frotteurs disposés au niveau des extrémités de ce frotteur 80.

Ainsi le schéma de la figure 12 peut tout aussi bien concerner un dispositif où un rail de commande est confondu avec le rail d'alimentation, un dispositif comportant un rail de commande séparé du rail d'alimentation, ou un dispositif à boucles de commande. On suppose que les segments de rail de commande ou les boucles conductrices sont de même géométrie et placés aux mêmes niveaux que les segments du rail d'alimentation par rapport à la direction de la marche.

Sur la figure 12, l'emprise du véhicule électrique 5 a été schématisée par un simple rectangle.

Le frotteur d'alimentation 80 est également schématisé par un rectangle, tandis que les émetteurs de commande 90 et 91 ainsi que le frotteur de retour de courant 85, sont représentés par des triangles renversés.

Un frotteur de courant 85 n'est bien sûr pas nécessaire dans le cas d'un dispositif à retour de courant par un rail ou une piste de retour parallèle à la piste d'alimentation.

Toutefois, dans un tel cas, et en particulier si la ligne de retour est reliée à la terre, le frotteur 85 peut être un frotteur de sécurité relié électriquement à la ligne de retour de courant reliée à la terre, de sorte qu'il garantit un retour à la terre de tout segment avec lequel il est en contact.

Ainsi, en cas d'une éventuelle défaillance du système de commutation, un segment resté accidentellement à 750 volts va être mis à la masse par le frotteur 85, ce qui va produire une disjonction du dispositif de commutation du segment en question, comme on le verra plus loin, sans mettre en jeu les disjoncteurs de protection générale situés en amont de l'alimentation 750 V et non représentés.

Plus généralement, on prévoit de manière facultative mais avantageuse, de placer, dans un tel cas, un deuxième frotteur de sécurité en avant de la zone d'activation à une distance de l'extrémité avant de celle-ci qui est supérieure à la longueur d'un segment d'alimentation.

Le point de contact entre le frotteur 85 et le rail d'alimentation 50 est considéré comme étant sensiblement ponctuel. De même, le émetteurs 90 et 91 sont considérés comme ayant un effet magnétique ponctuel à l'intérieur d'une boucle 62. Le point où chacun de ces éléments est efficace est le sommet renversé de chacun des triangles symbolisant ces éléments.

Le véhicule 5 est représenté sur cette figure à l'attaque d'un joint isolant 54.

Comme mentionné précédemment, l'émetteur de commande avant 91 attaque le segment suivant en avance sur le frotteur d'alimentation 80 pour assurer que ce segment suivant soit alimenté avant l'arrivée du frotteur d'alimentation 80.

Les deux segments 52 qui se situent entièrement sous le véhicule 5, sur la figure 12, sont donc mis sous tension.

En référence à la figure 12, on définit des distances et largeurs caractéristiques du dispositif d'alimentation, en rapport avec les dimensions du véhicule 5 et la disposition des trotteurs sous ce véhicule.

Ainsi :
- LSGRE: est la longueur de chacun des segments 52
- LCPE: est la longueur de chacun des joints isolants 54
- LFE: est la longueur du frotteur d'alimentation 80
- XFE: est la distance séparant le centre du frotteur 80 au frotteur arrière 85.

Les émetteurs de commande 90 et 91, ponctuels, sont situés respectivement à une distance X_{FCR} et X_{FCA} du frotteur arrière 85.

LV est la longueur de la caisse du véhicule 5.

Par ailleurs, on appelle V la vitesse maximale du véhicule et T_{C} le temps de commutation d'un segment.

Plus précisément, T_{C} est la durée maximale séparant l'apparition ou la disparition d'une émission de commande dans une boucle de commande 62 et respectivement l'apparition ou la disparition de la tension d'alimentation sur le segment d'alimentation 52 correspondant.

Comme mentionné précédemment, la longueur L_{FF} du frotteur d'alimentation 80 est avantageusement plus grande que la longueur L_{CPF} des joints d'isolation 54. De cette manière, le frotteur d'alimentation 80 quitte un segment d'alimentation 52 alors qu'il est déjà en contact avec le segment suivant, préalablement alimenté.

On obtient ainsi une alimentation permanente, sans rupture, du véhicule, en évitant ainsi les phénomènes d'amorçage et d'arcs électriques.

Un tel pontage de l'isolant peut également être obtenu en remplaçant le frotteur long 80 par deux frotteurs plus courts implantés par exemple aux points où se trouveraient les deux extrémités d'un frotteur long 80.

Il est important que le point d'émission de l'émetteur de commande arrière 90 se trouve à l'arrière du bord arrière du frotteur d'alimentation 80, afin que le frotteur d'alimentation 80 ait quitté un segment donné 52 avant que l'émetteur de commande arrière 90 n'ait lui-même quitté la boucle de commande correspondante et que ledit segment donné 52 soit amené à la terre.

Par ailleurs, le signal de commande transmis par une boucle donnée 62 doit avoir disparu avant que le frotteur arrière 85 n'entre en contact avec le segment d'alimentation 52 qui lui correspond, en tenant compte des temps de commutation.

Pour cela, on place l'émetteur arrière de commande 90 à une distance X_{FCR} du frotteur arrière 85 qui est supérieure à la longueur d'un segment 52 augmentée du produit de la vitesse maximale V du véhicule par le temps de commutation T_{C}.

En outre, sachant qu'aucun segment sous tension ne doit déborder de l'avant du véhicule, la distance (LV - X_{FCA}) séparant l'émetteur de commande avant 91 du bord avant du véhicule 5 doit être supérieure à la longueur d'un segment 52.

De la même façon, aucun segment sous tension ne doit déborder de l'arrière du véhicule, en tenant compte du temps de commutation et même à vitesse maximale du véhicule, la distance séparant le bord arrière du véhicule et l'émetteur arrière de commande 90 doit être supérieure à la longueur d'un segment d'alimentation 52, augmentée du produit de la vitesse maximale V du véhicule par le temps de commutation à T_{C} (même condition que plus haut).

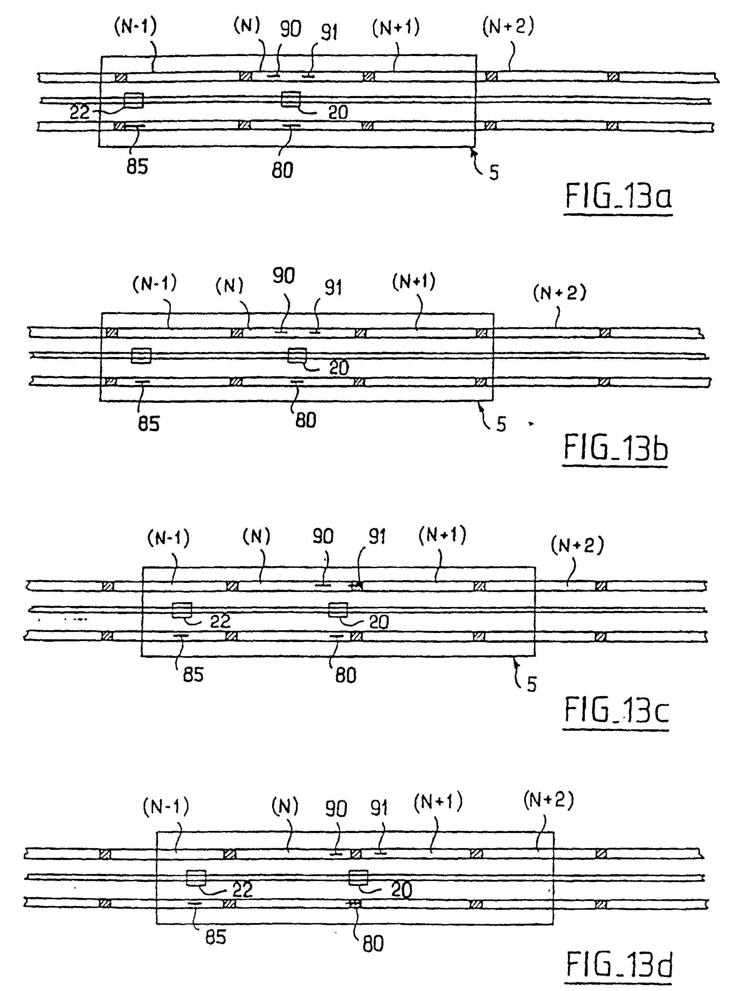

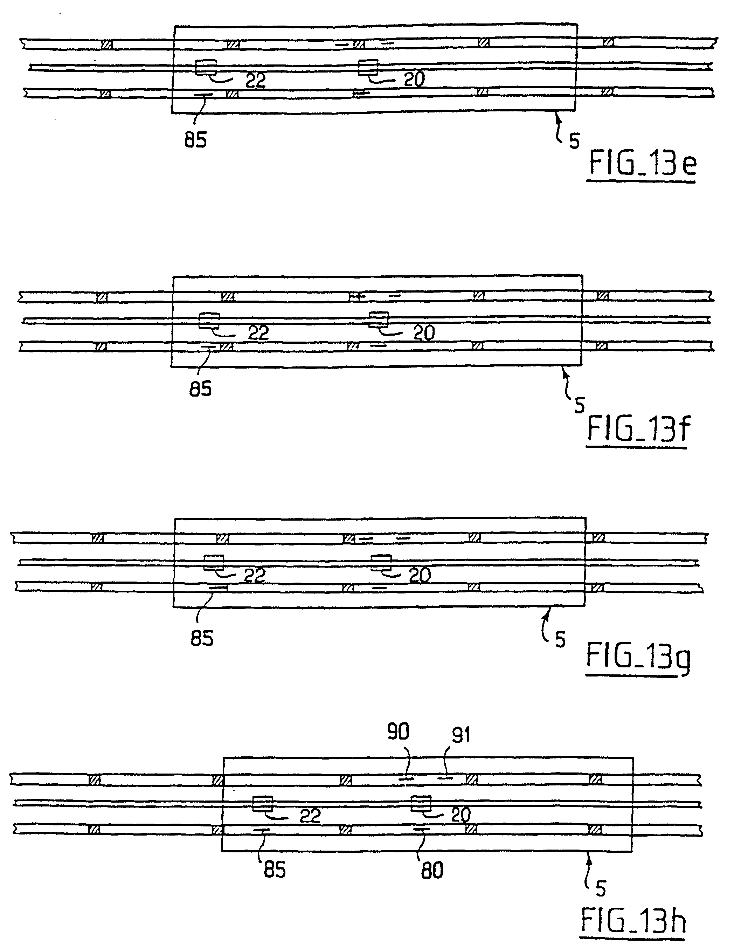

On a représenté, sur les figures 13a, 13b, ..., 13h, différents états successifs d'un dispositif d'alimentation conforme à celui des figures 9 à 11.

Là encore, les figures 13a à 13h sont facilement adaptables aux autres modes de réalisation de l'invention, notamment en considérant que le rail de commande 60 est confondu avec le rail d'alimentation 50, ou bien que le rail de commande 60 est remplacé par un ensemble de boucles 62 disposées bout à bout.

Les étapes correspondant aux figures 13a à 13h constituent un cycle complet de changement de segment d'alimentation, dans lequel les recommandations de dispositions précédemment mentionnées ont été respectées.

On a représenté quatre segments d'alimentation et de commande référencés (N-1), N, (N+1) et (N+2), et pour chacun de ces états, on a mentionné dans les tableaux ci-dessous, sous forme d'indication O (oui)/N (non), si :
- le segment d'alimentation est protégé par le véhicule,
- le segment d'alimentation est mis à la terre par contact avec le frotteur arrière 85 de sécurité de mise à la terre,
- le segment de commande est sous tension de commande, c'est-à-dire s'il est en contact avec un frotteur de commande,
- le segment d'alimentation est sous tension de traction,
- le courant de traction est établi, c'est-à-dire si le segment d'alimentation est en contact avec le frotteur d'alimentation 80.

A l'état initial, représenté sur la figure 9 a :

| Segment | N-1 | N | N+1 | N+2 |
|---|---|---|---|---|
| Protection par le véhicule | O | O | N | N |
| Mise à la terre par le véhicule | O | N | N | N |
| Sous tension de commande | N | O | N | N |
| Sous tension de traction | N | O | N | N |
| Courant de traction établi | N | O | N | N |

Lorsque l'avant du véhicule attaque le segment (N+2), figure 9 b :

| Segment | N-1 | N | N+1 | N+2 |
|---|---|---|---|---|
| Protection par le véhicule | O | O | O | N |
| Mise à la terre par le véhicule | O | N | N | N |
| Sous tension de commande | N | O | N | N |
| Sous tension de traction | N | O | N | N |
| Courant de traction établi | N | O | N | N |

Lorsque le frotteur de commande avant 91 attaque le segment (N+1), figure 9c :

| Segment | N-1 | N | N+1 | N+2 |
|---|---|---|---|---|
| Protection par le véhicule | O | O | O | N |
| Mise à la terre par le véhicule | O | N | N | N |
| Sous tension de commande | N | O | O | N |
| Sous tension de traction | N | O | O | N |
| Courant de traction établi | N | O | N | N |

Lorsque le frotteur d'alimentation 80 attaque le segment (N+1), figure 9 d :

| Segment | N-1 | N | N+1 | N+2 |
|---|---|---|---|---|
| Protection par le véhicule | O | O | O | N |
| Mise à la terre par le véhicule | O | N | N | N |
| Sous tension de commande | N | O | O | N |
| Sous tension de traction | N | O | O | N |
| Courant de traction établi | N | O | O | N |

Lorsque le frotteur d'alimentation 80 quitte le segment N, figure 9 e :

| Segment | N-1 | N | N+1 | N+2 |
|---|---|---|---|---|
| Protection par le véhicule | O | O | O | N |
| Mise à la terre par le véhicule | O | N | N | N |
| Sous tension de commande | N | O | O | N |
| Sous tension de traction | N | O | O | N |
| Courant de traction établi | N | N | O | N |

Lorsque le frotteur de commande arrière 90 libère le segment N, figure 9 f:

| Segment | N-1 | N | N+1 | N+2 |
|---|---|---|---|---|
| Protection par le véhicule | O | O | O | N |
| Mise à la terre par le véhicule | O | N | N | N |
| Sous tension de commande | N | N | O | N |
| Sous tension de traction | N | N | O | N |
| Courant de traction établi | N | N | O | N |

Lorsque le frotteur arrière de mise à la masse 85 attaque le segment N, figure 9 g :

| Segment | N-1 | N | N+1 | N+2 |
|---|---|---|---|---|
| Protection par le véhicule | O | O | O | N |
| Mise à la terre par le véhicule | N | O | N | N |
| Sous tension de commande | N | N | O | N |
| Sous tension de traction | N | N | O | N |
| Courant de traction établi | N | N | O | N |

Lorsque l'arrière du véhicule 5 attaque le segment N, figure 9 h :

| Segment | N-1 | N | N+1 | N+2 |
|---|---|---|---|---|
| Protection par le véhicule | N | O | O | N |
| Mise à la terre par le véhicule | N | O | N | N |
| Sous tension de commande | N | N | O | N |
| Sous tension de traction | N | N | O | N |
| Courant de traction établi | N | N | O | N |

Bien entendu, l'invention n'est pas limitée aux exemples de réalisation qui viennent d'être décrits, mais s'étend à toute variante conforme à son esprit.

On peut ainsi, dans le cadre de l'invention, réaliser un dispositif adapté pour être parcouru par des véhicules dirigés par un conducteur. Un tel dispositif présente des pistes d'une largeur suffisante pour permettre des écarts latéraux du véhicule sans que le contact entre le véhicule et les pistes soit interrompu.

On prévoit également selon l'invention d'adopter des segments d'alimentation de longueur non constante, en particulier d'adopter des segments de longueur réduite en sortie d'une éventuelle station de départ du véhicule, afin de provoquer des commutations assez fréquentes même lorsque le véhicule circule à basse vitesse, afin de limiter d'éventuels échauffements des thyristors.

On peut également remplacer les thyristors des dispositifs décrits par des transistors ou par tout autre type de commutateur à semi-conducteur.

## Revendications

1. Dispositif d'alimentation par le sol pour véhicule électrique (5), comportant une piste d'alimentation (50) constituée de segments (52) séparés les uns des autres par des joints isolants (54), et ayant chacun une longueur inférieure à la moitié de la longueur de l'emprise au sol du véhicule (5), ainsi qu'un dispositif de commutation (200) apte à mettre un segment (52) sous une tension d'alimentation uniquement lorsque ledit segment (52) se trouve inscrit dans l'emprise au sol du véhicule (5), le véhicule (5) comportant un moyen formant frotteur(s) d'alimentation (80, 81, 82) du véhicule (5) dont l'étendue est supérieure à la longueur des joints isolants (54), le dispositif de commutation (200) étant apte à mettre deux segments (52) adjacents sous tension d'alimentation pendant que le moyen formant frotteur(s) (80, 81, 82) est en contact simultané avec ces deux segments (52), et à mettre l'un des deux segments (52) à la terre avant que le segment considéré n'ait commencé à sortir de l'emprise du véhicule, **caractérisé en ce qu'**il inclut pour chaque segment (52) un composant (TH3) apte à relier sur commande le segment à la terre, **en ce qu'**il inclut des moyens (360) pour injecter un courant dans le composant (TH3) de mise à la terre ainsi que des moyens (RL2, C3, 600) pour disjoncter le segment (52) vis à vis d'une source de ladite tension d'alimentation, moyens pour disjoncter qui sont commandés par le courant injecté.

2. Dispositif selon la revendication 1, **caractérisé en ce que** les moyens pour disjoncter incluent un fil pilote (600) qui, lorsqu'il est sectionné, fait disjoncter ladite source de tension d'alimentation, et un relais (RL2) placé de manière à être traversé par un courant de commande correspondant au courant injecté, ce relais (RL2) commandant lui-même l'ouverture ou la fermeture d'un premier interrupteur (C4) placé sur le fil pilote (600).

3. Dispositif selon la revendication 2, **caractérisé en ce qu'**il comprend un module de commutation (500) pour chaque segment d'alimentation (52), qui reçoit une tension d'entrée lorsqu'un segment (63) ou une boucle (62) de commande correspondant à ce segment d'alimentation (52) reçoit un signal de présence, et **en ce que** le module de commutation (500) inclut un relais principal (RL1) commandé par cette tension d'entrée, et qui commande un interrupteur du fil pilote, interrupteur qui est placé en parallèle dudit premier interrupteur (C4).

4. Dispositif selon la revendication 3, **caractérisé en ce que** le relais (RL2) qui est placé de manière à être traversé par ledit courant correspondant au courant injecté dans l'élément de mise à la terre (TH3) est placé en série d'un interrupteur commandé par ledit relais principal (RL1).

5. Dispositif selon l'une des revendications précédentes, **caractérisé en ce que** le véhicule (5) porte un dispositif de commande (7, 90, 91, 92, 93, 94, 95) apte à provoquer la mise en tension de tout segment (52) dont au moins une partie se trouve dans une zone d'activation (90, 91, 92, 93, 94, 95) dont les extrémités (90, 91, 92, 93, 94, 95) se situent de part et d'autre et au-delà des bords avant et arriére du moyen formant frotteur(s) (80, 81, 82) du véhicule (5).

6. Dispositif selon la revendication 5, **caractérisé en ce que** la distance entre l'extrémité avant (91,93, 95) de ladite zone d'activation (90, 91, 92, 93, 94, 95) et le bord avant du moyen formant frotteur(s) d'alimentation (80, 81, 82) est supérieure au produit de la vitesse maximale (V) du véhicule (5) par un temps maximal de commutation de segment.

7. Dispositif selon la revendication 6, **caractérisé en ce que** le dispositif de commande (7, 90, 91) est constitué de deux générateurs de signaux de présence (90, 91, 92, 93, 94, 95) qui définissent lesdites extrémités de ladite zone d'activation (90, 91, 92, 93, 94, 95).

8. Dispositif selon la revendication 7, **caractérisé en ce qu'**il comporte une piste de réception (60) de commande constitué de segments isolés (63) ayant mêmes longueurs et mêmes positions que les segments (52) de la piste d'alimentation (50), et **en ce que** les générateurs de signaux (90, 91, 92, 93, 94, 95) sont constitués de deux frotteurs (92, 93, 94, 95) reliés à un générateur de tension (7,8) embarqué dans le véhicule (5), en contact sur une étendue limitée avec ladite piste de commande (60).

9. Dispositif selon la revendication 8, **caractérisé en ce que** la piste de réception de commande (60) et la piste d'alimentation (50) forment une même piste, et **en ce que** le générateur de tension (8) est un générateur de tension alternative (8) superposée à une tension d'alimentation.

10. Dispositif selon l'une des revendications 1 à 9, **caractérisé en ce que** le dispositif de commande (7, 90, 91) comporte au moins une boucle de courant (90,91) embarquée sur le véhicule (5) et **en ce que** le dispositif comporte un ensemble de boucles de courant (62) disposées successivement le long de la piste d'alimentation (50) et chacune apte à transmettre un signal électrique de commande lorsqu'elle est traversée par un champ magnétique, la boucle embarquée (90,91) et les boucles (62) disposées le long de la piste (50) étant agencées de façon à produire un couplage magnétique local lorsque la boucle embarquée (90,91) est au droit de l'une des boucles (62) disposées le long de la piste.

11. Dispositif selon la revendication précédente, **caractérisé en ce que** les boucles (62) ont mêmes longueurs et mêmes positions que les segments (52) de la piste d'alimentation (50), et **en ce que** le véhicule (5) porte deux boucles de courant embarquées (90, 91) disposés de part et d'autre et au-delà des bords avant et arrière du moyen formant frotteur(s) (80, 81, 82), qui définissent lesdites extrémités de ladite zone d'activation (90, 91, 92, 93, 94, 95)

12. Dispositif selon l'une des revendications 5 à 11, **caractérisé en ce qu'**il comporte une piste de retour de courant (10) et **en ce que** le véhicule (5) porte un frotteur de sécurité (85) en contact avec la piste d'alimentation (50) et relié directement à la piste de retour de courant (10), disposé en arrière de l'extrémité arrière (90, 92, 94) de la dite zone d'activation (90, 91, 92, 93, 94, 95), à une distance de cette extrémité (90, 92, 94) qui est supérieure à la longueur d'un segment d'alimentation (52) augmentée du produit de la vitesse maximale (V) du véhicule (5) par un temps maximal (TC) de commutation du segment (52).

13. Dispositif selon l'une des revendications 5 à 12, **caractérisé en ce que** le véhicule (5) porte un frotteur de retour (85) du courant d'alimentation issu du moteur du véhicule (5), ce frotteur (85) étant en contact avec la piste d'alimentation (50) et disposé en avant de l'extrémité avant (91, 93, 95) de la zone d'activation (90, 91, 92, 93, 94, 95), à une distance de cette extrémité qui est supérieure à la longueur d'un segment d'alimentation (52).

14. Dispositif selon l'une des revendications 5 à 13, **caractérisé en ce que** le véhicule (5) porte un frotteur de retour (85) du courant d'alimentation issu du moteur du véhicule (5), ce frotteur (85) étant en contact avec la piste d'alimentation (50) et disposé en arriére de l'extrémité arrière (90, 92, 94) de ladite zone d'activation (90, 91, 92, 93, 94, 95), à une distance de cette extrémité (90, 92, 94) qui est supérieure à la longueur d'un segment d'alimentation (52) augmentée du produit de la vitesse maximale (V) du véhicule (5) par un temps maximal (TC) de commutation d'un segment d'alimentation (52).

15. Dispositif selon l'une des revendications précédentes, **caractérisé en ce que** le dispositif comprend un module de commutation (500) pour chaque segment d'alimentation (52), qui reçoit une tension d'entrée lorsqu'un segment (63) ou une boucle (62) de commande correspondant à ce segment d'alimentation (52) reçoit un signal de présence du véhicule (5).

16. Dispositif selon la revendication 15, **caractérisé en ce que** le module de commutation (500) est apte à relier sélectivement le segment d'alimentation (52) correspondant à la terre ou à une source permanente de tension (300).

17. Dispositif selon la revendication 16, **caractérisé en ce que** chaque module de commutation (500) comporte un dispositif de commutation à semi-conducteur (TH1) d'alimentation monté dans le sens passant entre la source permanente de tension (300) et le segment d'alimentation (52), dont une entrée de commande est reliée à une source permanente de basse tension (350) par l'intermédiaire d'un premier interrupteur (C1), commandé par un relais principal (RL1) alimenté par ladite tension d'entrée.

18. Dispositif selon la revendication 17, caractécisé en ce que chaque module de commutation (500) comporte un dispositif de commutation à semi-conducteur (TH2) de courant de freinage monté dans le sens passant entre le segment d'alimentation (52) et la source de tension permanente (300), dont une entrée de commande est reliée à ladite source de basse tension (350) permanente par l'intermédiaire dudit premier interrupteur (C1).

19. Dispositif selon l'une des revendications 17 à 18, **caractérisé en ce que** le module de commutation (500) comporte un dispositif de commutation à semi-conducteur (TH3) de mise à la terre monté dans le sens passant entre le segment d'alimentation (52) et la terre, et dont une entrée de commande est reliée à ladite source permanente de basse tension (350) par l'intermédiaire d'un second interrupteur (C0) commandé par ledit relais principal (RL1).

20. Dispositif selon l'une des revendications 17 à 19 **caractérisé en ce que** le module de commutation (500) comporte un fil pilote (600) qui, lorsqu'il est sectionné, fait disjoncter ladite source de tension permanente (300), et **en ce que** le fit pilote (600) comporte, en parallèle :
- un premier interrupteur (C4) de fil pilote commandé par un relais secondaire (RL2) qui est relié, d'une part, à ladite source permanente de basse tension (350) par l'intermédiaire d'un troisième interrupteur (C2) commandé par le relais principal (RL1) et qui, d'autre part, est relié au segment d'alimentation (52) par une diode montée passante dans le sens allant vers le segment d'alimentation (52), le premier interrupteur (C4) de fil pilote (600) étant fermé lorsque le relais secondaire (RL2) n'est pas alimenté.
- un second interrupteur de fil pilote (C3) commandé par le relais principal (RL1) et fermé lorsque le relais principal (RL1) est alimenté.

21. Dispositif selon la revendication 20, **caractérisé en ce qu'**un fusible (F) est placé en série avec la diode du relais secondaire (D3).

22. Dispositif selon les revendications 17 à 21 en combinaison, **caractérisé en ce que** le relais principal (RL1) est tel que, lorsqu'il est alimenté :
- le premier interrupteur (C1) est fermé ;
- le second interrupteur (C0) est ouvert ;
- le troisième interrupteur (C2) est ouvert ;
- et le second interrupteur de fil pilote (C3) est fermé.

## Claims

1. A ground power supply device for electrical vehicles (5) including a power supply track (50) made up of segments (52) separated from each other by insulative joints (54) and each having a length less than half the length of the footprint of the vehicle (5) and a switching device (200) adapted to apply a supply voltage to a segment (52) only when said segment (52) is within the footprint of the vehicle (5), the vehicle (5) having power supply rubbing member means (80, 81, 82) the extent of which is greater than the length of the insulative joints (54), the switching device (200) being adapted to apply the supply voltage to two adjacent segments (52) when the rubbing member means (80, 81, 82) are in simultaneous contact with the two segments (52) and to earth one of the two segments (52) before the segment under consideration starts to leave the footprint of the vehicle, the ground power supply device being **characterized in that** it includes, for each segment (52), a component (TH3) capable of earthing the segment on request, **in that** it includes means (360) for injecting a current into the earthing component (TH3), and means (RL2, C3, 600) for tripping out the segment (52) from a source of said supply voltage, which circuit-breaker means are controlled by the injected current.

2. A device according to claim 1, **characterized in that** the circuit-breaker means include a pilot wire (600) which, when cut, cause said supply voltage source to be tripped out, and a relay (RL2) placed in such a manner that a control current corresponding to the injected current passes therethrough, said relay (RL2) itself controlling the opening or closing of a first switch (C4) placed on the pilot wire (600).

3. A device according to claim 2, **characterized in that** it comprises a switching module (500) for each power supply segment (52) which receives an input voltage when a control segment (63) or a control loop (62) corresponding to a power supply segment (52) receives a presence-indicating signal, and **in that** the switching module (500) includes a main relay (RL1) controlled by said input voltage, and which controls a switch of the pilot wire, which switch is connected in parallel with said first switch (C4).

4. A device according to claim 3, **characterized in that** the relay (RL2), which is placed in such a manner that said current corresponding to the current injected into the earthing element (TH3) passes therethrough, is connected in series with a switch controlled by said main relay (RL1).

5. A device according to any preceding claim, **characterized in that** the vehicle (5) carries a control device (7, 90, 91, 92, 93, 94, 95) adapted to energize any segment (52) at least a part of which is in an activation area (90, 91, 92, 93, 94, 95) whose ends (90, 91, 92, 93, 94, 95) are on respective opposite sides of and beyond front and rear edges of the rubbing member means (80, 81, 82) of the vehicle (5).

6. A device according to claim 5, **characterized in that** the distance between the front end (91, 93, 95) of said activation area (90, 91, 92, 93, 94, 95) and the front edge of the power supply rubbing member means (80, 81, 82) is greater than the product of the maximum speed (V) of the vehicle (5) and a maximum segment switching time.

7. A device according to claim 6, **characterized in that** the control device (7, 90, 91) comprises two presence signal generators (90, 91, 92, 93, 94, 95) which define said ends of said activation area (90, 91, 92, 93, 94, 95).

8. A device according to claim 7, **characterized in that** it includes a control receiving track (60) made up of insulated segments (63) having the same lengths and the same locations as the segments (52) of the power supply track (50) and **in that** the signal generators (90, 91, 92, 93, 94, 95) comprise two rubbing members (92, 93, 94, 95) connected to a voltage generator (7, 8) on board the vehicle (5) in contact over a limited distance with said control track (60).

9. A device according to claim 8, **characterized in that** the control receiving track (60) and the power supply track (50) are combined and **in that** the voltage generator (8) generates an AC voltage (8) superimposed on a supply voltage.

10. A device according to any one of claims 1 to 9, **characterized in that** the control device (7, 90, 91) has at least one current loop (90, 91) on board the vehicle (5) and **in that** the device includes a set of current loops (62) disposed successively along the power supply track (50) and each adapted to transmit an electrical control signal when a magnetic field passes through it, the onboard loop (90, 91) and the loops (62) disposed along the track (50) being adapted to produce local magnetic coupling when the onboard loop (90, 91) is in line with one of the loops (62) disposed along the track.

11. A device according to claim 7, **characterized in that** the loops (62) have the same lengths and the same locations as the segments (52) of the power supply track (50) and **in that** the vehicle (5) carries two onboard current loops (90, 91) disposed on respective opposite sides of and beyond front and rear edges of the rubbing member means (80, 81, 82) which define said ends of said activation area (90, 91, 92, 93, 94, 95).

12. A device according to any one of claims 5 to 11, **characterized in that** it includes a current return track (10) and **in that** the vehicle (5) carries a safety rubbing member (85) in contact with the power supply track (50) and connected directly to the current return track (10) disposed to the rear of the rear end (90, 92, 94) of said activation area (90, 91, 92, 93, 94, 95) at a distance from that end (90, 92, 94) greater than the length of a power supply segment (52) plus the product of the maximum speed (V) of the vehicle (5) and a maximum switching time (T_{c}) of the segment (52).

13. A device according to any one of claims 5 to 12, **characterized in that** the vehicle (5) carries a return rubbing member (85) for the power supply current from the motor of the vehicle (5), the rubbing member (85) being in contact with the power supply track (50) and disposed ahead of the front end (91, 93, 95) of the activation area (90, 91, 92, 93, 94, 95) at a distance from that end greater than the length of a power supply segment (52).

14. A device according to any one of claims 5 to 13, **characterized in that** the vehicle (5) carries a return rubbing member (85) for the power supply current from the motor of the vehicle (5), the rubbing member (85) being in contact with the power supply track (50) and disposed to the rear of the rear end (90, 92, 94) of said activation area (90, 91, 92, 93, 94, 95) at a distance from that end (90, 92, 94) greater than the length of a power supply segment (52) plus the product of the maximum speed (V) of the vehicle (5) and a maximum switching time (T_{c}) of a power supply segment (52).

15. A device according to any preceding claim, **characterized in that** the device comprises a switching module (500) for each power supply segment (52) which receives an input voltage when a control segment (63) or a control loop (62) corresponding to a power supply segment (52) receives a signal indicating presence of the vehicle (5).

16. A device according to claim 15, **characterized in that** the switching module (500) is adapted to connect the corresponding power supply segment (52) selectively to earth or to a permanent voltage source (300).

17. A device according to claim 16, **characterized in that** each switching module (500) includes a semiconductor power supply switching device (TH1) conducting in the direction from the permanent voltage source (300) to the power supply segment (52) and a control input of which is connected to a permanent low-voltage source (350) via a first switch (C1) controlled by a main relay (RL1) energized by said input voltage.

18. A device according to claim 17, **characterized in that** each switching module (500) includes a braking current semiconductor switching device (TH2) conducting in the direction from the power supply segment (52) to the permanent voltage source (300) and a control input of which is connected to said permanent low-voltage source (350) via said first switch (C1).

19. A device according to claim 17 or claim 18, **characterized in that** the switching module (500) includes an earthing semiconductor switching device (TH3) conducting in the direction from the power supply segment (52) to earth and a control input of which is connected to said permanent low-voltage source (350) via a second switch (C0) controlled by said main relay (RL1).

20. A device according to any one of claims 17 to 19, **characterized in that** the switching module (500) includes a pilot wire (600) which when cut trips out said permanent voltage source (300) and **in that** the pilot wire (600) includes in parallel:
- a first pilot wire (C4) controlled by a secondary relay (RL2) connected to said permanent low-voltage source (350) via a third switch (C2) controlled by the main relay (RL1) and connected to the power supply segment (52) via a diode conducting in the direction towards the power supply segment (52), the first switch (C4) of the pilot wire (600) being closed when the secondary relay (RL2) is not energized, and
- a second pilot wire switch (C3) controlled by the main relay (RL1) and closed when the main relay (RL1) is energized.

21. A device according to claim 20, **characterized in that** a fuse (F) is connected in series with the diode (D3) of the secondary relay.

22. A device according to claim 17 in conjunction with claim 21, **characterized in that** when the main relay (RL1) is energized:
- the first switch (C1) is closed;
- the second switch (C0) is open;
- the third switch (C2) is open; and
- the second pilot wire switch (C3) is closed.

## Patentansprüche

1. Vorrichtung für die Versorgung eines elektrischen Fahrzeugs (5) über den Boden mit einer Versorgungsspur (50) aus Segmenten (52), die durch Isolatorzwischenteile (54) voneinander getrennt sind und jeweils eine Länge haben, die kleiner als die Hälfte der Länge des Bodengestells des Fahrzeugs (5) ist, sowie einer Umschaltvorrichtung (200), die geeignet ist, ein Segment (52) genau dann auf Versorgungsspannung zu legen, wenn das Segment (52) in das Bodengestell des Fahrzeugs (5) eingekoppelt ist, wobei das Fahrzeug (5) Schleifschuh(e) (80, 81, 82) für die Versorgung des Fahrzeugs (5) aufweist, deren Ausdehnung größer als die Länge der Isolatorzwischenteile ist, wobei die Umschaltvorrichtung (200) geeignet ist, zwei benachbarte Segmente (52) bei gleichzeitigem Kontakt von dem (den) Schleifschuh(en) (80, 81, 82) für die Versorgung des Fahrzeugs mit den zwei Segmenten (52) auf die Versorgungsspannung zu legen, und eines der beiden Segmente (52) zu erden, bevor das betrachtete Segment beginnt, sich von dem Bodengestell des Fahrzeugs zu lösen, **dadurch gekennzeichnet, dass** sie für jedes Segment (52)eine Komponente (TH3) umfasst, die geeignet ist, das Segment gesteuert zu erden, sie Einrichtungen (360), um einen Strom in der Komponente (TH3) für die Erdung zu injizieren, sowie Einrichtungen (RL2, C3, 600) zum Abkoppeln des Segments (52) von einer Versorgungsspannungsquelle umfasst, wobei die Einrichtungen zum Abkoppeln durch den injizierten Strom gesteuert werden.

2. Vorrichtung nach Anspruch 1, **dadurch gekennzeichnet, dass** die Einrichtungen zum Abkoppeln einen Pilotdraht (600), der beim Trennen die Quelle für die Versorgungsspannung abkoppelt, und ein Relais (RL2) umfasst, das derart angeordnet ist, dass es von einem Steuerstrom durchflossen wird, der dem injizierten Strom entspricht, wobei das Relais (RL2) seinerseits einen ersten Unterbrecher (C4) in dem Pilotdraht (600) öffnet oder schließt.

3. Vorrichtung nach Anspruch 2, **dadurch gekennzeichnet, dass** sie ein Umschaltmodul (500) für jedes Versorgungssegment (52) umfasst, an dem eine Eingangsspannung anliegt, wenn an einem Steuersegment (63) oder -Kreis (62) dieses Versorgungssegments (52) ein Anwesenheitssignal anliegt, und das Umschaltmodul (500) ein Hauptrelais (RL1) umfasst, das durch diese Eingangsspannung gesteuert wird und das einen Unterbrecher des Pilotdrahtes steuert, wobei der Unterbrecher parallel zu dem ersten Unterbrecher (C4) angeordnet ist.

4. Vorrichtung nach Anspruch 3, **dadurch gekennzeichnet, dass** das Relais (RL2), das derart angeordnet ist, dass es von dem Strom durchflossen wird, der dem in dem Element zum Erden (TH3) injizierten Strom entspricht, in Reihe mit einem Unterbrecher geschaltet ist, der durch das Hauptrelais (RL1) gesteuert wird.

5. Vorrichtung nach einem der vorangehenden Ansprüche, **dadurch gekennzeichnet, dass** das Fahrzeug (5) eine Steuervorrichtung (7, 90, 91, 92, 93, 94, 95) aufweist, die geeignet ist, um das gesamte Segment (52) auf eine Spannung zu legen, von der sich wenigstens ein Teil in einem Aktivierungszone (90, 91, 92, 93, 94, 95) befindet, deren Enden beidseitig und außerhalb des vorderen und des hinteren Randes von dem (den) Schleifschuh(en) (80, 81, 82) des Fahrzeugs (5) angeordnet sind.

6. Vorrichtung nach Anspruch 5, **dadurch gekennzeichnet, dass** der Abstand zwischen dem vorderen Ende (91, 93, 95) der Aktivierungszone (90, 91, 92, 93, 94, 95) und dem Rand der Schleifschuhe für die Versorgung (80, 81, 82) größer als das Produkt aus maximaler Geschwindigkeit (V) des Fahrzeugs (5) und einer maximalen Zeit für das Umschalten des Segments ist.

7. Vorrichtung nach Anspruch 6, **dadurch gekennzeichnet, dass** die Vorrichtung zum Steuern (7, 90, 91) aus zwei Anwesenheitssignalgeneratoren (90, 91, 92, 93, 94, 95) aufgebaut ist, die die Enden der Aktivierungszone (90, 91, 92, 93, 94, 95) definieren.

8. Vorrichtung nach Anspruch 7, **dadurch gekennzeichnet, dass** sie eine Aufnahmespur (60) für die Steuerung umfasst, die aus isolierten Segmenten (63) mit den gleichen Längen und gleichen Positionen wie die Segmente (52) der Versorgungsspur (50) aufgebaut sind, und die Signalgeneratoren (90, 91, 92, 93, 94, 95) aus zwei Schleifern (92, 93, 94, 95) bestehen, die mit einem Spannungsgenerator (7, 8), der in dem Fahrzeug (5) eingebaut ist, verbunden sind, die über eine begrenzte Ausdehnung Kontakt mit der Steuerungsspur (60) haben.

9. Vorrichtung nach Anspruch 8, **dadurch gekennzeichnet, dass** die Aufnahmespur (60) für die Steuerung und die Versorgungsspur (50) ein und dieselbe Spur sind und der Spannungsgenerator (8) ein Generator (8) für eine Wechselspannung ist, die einer Versorgungsspannung überlagert ist.

10. Vorrichtung nach einem der Ansprüche 1 bis 9, **dadurch gekennzeichnet, dass** die Steuervorrichtung (7, 90, 91) wenigstens einen Stromkreis (90, 91) umfasst, der in dem Fahrzeug (5) eingebaut ist, und die Vorrichtung eine Gruppe von Stromkreisen (62) umfasst, die hintereinander entlang der Versorgungsspur (50) angeordnet sind und die jeweils geeignet sind, ein elektrisches Steuersignal zu übertragen, wenn sie von einem Magnetfeld durchströmt werden, wobei der eingebaute Kreis (90, 91) und die Kreise (62) entlang der Spur (50) derart ausgelegt sind, dass eine lokale magnetische Kopplung erzeugt wird, wenn der eingebaute Kreis (90, 91) mit einem Kreis (62) entlang der Spur ausgerichtet ist.

11. Vorrichtung nach dem vorangehenden Anspruch, **dadurch gekennzeichnet, dass** die Kreise (62) die gleiche Länge und die gleichen Positionen wie die Segmente (52) der Versorgungsspur (50) aufweisen und das Fahrzeug (5) zwei eingebaute Stromkreise (90, 91) aufweist, die beidseitig und außerhalb vor und hinter dem Rand von dem (den) Schleifschuh(en) (80, 81, 82) angeordnet sind, die die Enden der Aktivierungszonen (90, 91, 92, 93, 94, 95) definieren.

12. Vorrichtung nach einem der Ansprüche 5 bis 11, **dadurch gekennzeichnet, dass** sie eine Stromrückführungsspur (10) umfasst und das Fahrzeug (5) einen Sicherheitsschleifer (85) in Kontakt mit der Versorgungsspur (50) und in direkter Verbindung mit der Stromrückführungsspur (10) hinter dem hinteren Ende (9, 92, 94) der Aktivierungszone (90, 91, 92, 93, 94, 95) in einem Abstand von diesem Ende (90, 92, 94) umfasst, der größer ist als die Summe aus der Länge eines Versorgungselements (52) und dem Produkt der maximalen Geschwindigkeit (V) des Fahrzeugs (5) mit einer maximalen Zeit (TC) für das Umschalten des Segments (52).

13. Vorrichtung nach einem der Ansprüche 5 bis 12, **dadurch gekennzeichnet, dass** das Fahrzeug (5) einen Rückführungsschleifer (85) für Versorgungsstrom von dem Motor des Fahrzeugs (5) umfasst, wobei der Schleifer (85) in Kontakt mit der Versorgungsspur (50) steht und vor dem vorderen Ende (91, 93, 95) der Aktivierungszone (90, 91, 92, 93, 94, 95) mit einem Abstand zu diesem Ende angeordnet ist, der größer als die Länge eines Versorgungssegments (52) ist.

14. Vorrichtung nach einem der Ansprüche 5 bis 13, **dadurch gekennzeichnet, dass** das Fahrzeug (5) einen Rückführungsschleifer (85) für Versorgungsstrom von dem Motor des Fahrzeugs (5) umfasst, wobei der Schleifer (85) in Kontakt mit der Versorgungsspur (50) steht und hinter dem hinteren Ende (90, 92, 94) der Aktivierungszone (90, 91, 92, 93, 94, 95) in einem Abstand von diesem Ende (90, 92, 94) angeordnet ist, der größer ist als die Summe aus der Länge eines Versorgungselements (52) und dem Produkt der maximalen Geschwindigkeit (V) des Fahrzeugs (5) mit einer maximalen Zeit (TC) für das Umschalten des Segments (52).

15. Vorrichtung nach einem der vorangehenden Ansprüche, **dadurch gekennzeichnet, dass** die Vorrichtung ein Umschaltmodul (500) für jedes Versorgungssegment umfasst, an dem eine Eingangsspannung anliegt, wenn an einem Steuersegment (63) oder -Kreis (62) dieses Versorgungssegments (52) ein Anwesenheitssignal des Fahrzeugs (5) anliegt.

16. Vorrichtung nach Anspruch 15, **dadurch gekennzeichnet, dass** das Umschaltmodul (500) geeignet ist, selektiv das entsprechende Versorgungssegment (52) mit Masse oder einer permanenten Spannungsquelle (300) zu verbinden.

17. Vorrichtung nach Anspruch 16, **dadurch gekennzeichnet, dass** das Umschaltmodul (500) für die Versorgung eine Umschaltvorrichtung mit Halbleitern (TH1 ) umfasst, die zwischen permanenter Spannungsquelle (300) und dem Versorgungssegment (52) in Durchlassrichtung geschaltet sind, deren einer Steuereingang über einen ersten Unterbrecher (C1), der durch ein Hauptrelais (RL1) gesteuert wird, das durch die Eingangsspannung versorgt wird, mit einer permanenten Niedrigspannungsquelle (350) verbunden ist.

18. Vorrichtung nach Anspruch 17, **dadurch gekennzeichnet, dass** jedes Umschaltmodul (500) eine Umschaltvorrichtung für Bremsstrom mit Halbleitern (TH2) umfasst, die zwischen das Versorgungssegment (52) und die permanente Spannungsquelle (300) in Durchlassrichtung geschaltet sind, deren einer Steuereingang über den ersten Unterbrecher (C1 ) mit der permanenten Niedrigspannungsquelle (350) verbunden ist.

19. Vorrichtung nach Anspruch 17 oder 18, **dadurch gekennzeichnet, dass** das Umschaltmodul (500) eine Umschaltvorrichtung (TH3) zum Herstellen eines Masseschlusses mit Halbleitern umfasst, die zwischen das Versorgungssegment (52) und Masse in Durchlassrichtung geschaltet sind, deren einer Steuereingang über einen zweiten Unterbrecher (C0), der durch das Hauptrelais (RL1) gesteuert wird, mit der permanenten Niedrigspannungsquelle (350) verbunden ist.

20. Vorrichtung nach einem der Ansprüche 17 bis 19, **dadurch gekennzeichnet, dass** das Umschaltmodul (500) einen Pilotdraht (600) umfasst, der beim Trennen die permanente Spannungsquelle (300) abkoppelt, und
- der Pilotdraht (600) parallel dazu umfasst:einen ersten Unterbrecher (C4) des Pilotdrahtes, der durch ein Sekundärrelais (RL2) gesteuert wird, das einerseits über einen dritten Unterbrecher (C2), der durch das Hauptrelais (RL1 ) gesteuert wird, mit der permanenten Niedrigspannungsquelle (350) verbunden ist und andererseits über eine in Richtung zum Versorgungssegment (52) in Durchlass geschaltete Diode mit dem Versorgungssegment verbunden ist, wobei der erste Unterbrecher (C4) des Pilotdrahtes (600) geschlossen ist, wenn das Sekundärrelais (RL2) nicht versorgt wird,
- einen zweiten Unterbrecher (C3) des Pilotdrahtes, der durch das Hauptrelais (RL1 ) gesteuert wird und geschlossen ist, wenn das Hauptrelais (RL1) versorgt wird.

21. Vorrichtung nach Anspruch 20, **dadurch gekennzeichnet, dass** eine Sicherung (F) mit der Diode (D3) des Sekundärrelais in Reihe geschaltet ist.

22. Vorrichtung nach einem der Ansprüche 17 bis 21, **dadurch gekennzeichnet, dass** bei der Versorgung des Hauptrelais (RL1):
der erste Unterbrecher (C1) geschlossen wird,
der zweite Unterbrecher (C0) geöffnet wird,
der dritte Unterbrecher (C2) geöffnet wird,
der zweite Unterbrecher des Pilotdrahtes (C3) geschlossen wird.
